# EUROPÄISCHE PATENTSCHRIFT

(11) **EP 4 264 801 B1**
(45) Veröffentlichungstag und Bekanntmachung des Hinweises auf die Patenterteilung: **12.08.2026**
(21) Anmeldenummer: 21823503.4
(22) Anmeldetag: 29.11.2021
(51) Int. Cl.: H02K 3/50, H02K 15/33, H02K 15/12, H01F 5/04, H01R 4/02, H01R 9/16

(54) **ANSCHLUSSEINHEIT FÜR EINEN STATOR, STATORANORDNUNG FÜR EINE ELEKTRISCHE MASCHINE, VERFAHREN ZUR HERSTELLUNG EINER STATORANORDNUNG UND ELEKTRISCHE MASCHINE ZUM ANTREIBEN EINES FAHRZEUGS**
CONNECTION UNIT FOR A STATOR, STATOR ASSEMBLY FOR AN ELECTRIC MACHINE, METHOD FOR PRODUCING A STATOR ASSEMBLY, AND ELECTRIC MACHINE FOR DRIVING A VEHICLE
UNITÉ DE CONNEXION POUR UN STATOR, ENSEMBLE STATOR POUR UNE MACHINE ÉLECTRIQUE, PROCÉDÉ DE FABRICATION D'UN ENSEMBLE STATOR, ET MACHINE ÉLECTRIQUE POUR L'ENTRAÎNEMENT D'UN VÉHICULE

(30) Priorität: 15.12.2020 DE 102020215910
(43) Veröffentlichungstag der Anmeldung: 25.10.2023
(73) Patentinhaber: Valeo Electrification, 95892 Cergy Pontoise (FR)
(72) Erfinder: DIETERICH, Sebastian, 97616 Bad Neustadt a.d.Saale (DE); HOFMANN, Bianca, 97616 Bad Neustadt a.d.Saale (DE); MENZ, Michael, 97616 Bad Neustadt a.d.Saale (DE)
(74) Vertreter: Valeo Powertrain Systems
(86) Internationale Anmeldenummer: PCT/EP2021/083341
(87) Internationale Veröffentlichungsnummer: WO 2022/128424

(56) Entgegenhaltungen:
- EP-A1- 3 561 962
- EP-B1- 1 776 738
- EP-B1- 3 051 671
- FR-A1- 3 054 745

## Beschreibung

Die vorliegende Erfindung betrifft eine Anschlusseinheit für einen Stator mit einer eine Anzahl N Stränge aufweisenden Statorwicklungen. Daneben betrifft die Erfindung eine Statoranordnung für eine elektrische Maschine, ein Verfahren zur Herstellung einer Statoranordnung und eine elektrische Maschine zum Antreiben eines Fahrzeugs.

Anschlusseinheiten für einen Stator mit einer Statorwicklung, die N Stränge aufweist, werden verwendet, um Anschlussabschnitte der Statorwicklung anzuschließen. Die Anschlusseinheit umfasst dazu eine der Anzahl der Stränge entsprechende Anzahl von Kontaktabschnitten und eine Leiteranordnung. Die Kontaktabschnitte weisen jeweils einen Aufnahmeraum für einen der Anschlussabschnitte auf.

Zur Ausbildung eines Sternpunkts kann die Leiteranordnung die Kontaktabschnitte elektrisch leitfähig verbinden. So offenbart die DE 10 2019 122 550 A1 eine elektrische Maschine mit einem Statorkern und Haarnadeln, die verbunden sind, um Wicklungen zu bilden und einen durchgehenden Stromkreis zwischen einem Klemmenende und einem neutralen Ende zu bilden. Es ist eine neutrale Verbindung vorgesehen, die an jedem der neutralen Enden angebracht ist und einen bogenförmigen Körper mit einer Innenseite und einer Außenseite beinhaltet. Die Innenseite definiert offene Nuten, wobei jede der Nuten eines der neutralen Enden darin aufnimmt.

FR 3 054 745 A1 betrifft eine elektrische Maschine mit Statorwicklung und einem Interconnecter mit Haken, die durch plastische Verformung der Wicklungsenden eine lötfreie, stabile und zuverlässige Verbindung sowie vereinfachte Montage ermöglichen. Der Interconnecter umfasst U- oder V-förmige Haken aus hartem leitfähigem Material, Führungsgoulotten für Wicklungsenden, Befestigungsböcke, Kühlöffnungen und Murets zur Vermeidung von Überschlägen in einer doppeltriphasigen Statorwicklung. Die Erfindung ersetzt herkömmliche Lötverbindungen der Wicklungsenden durch einklipsende Hakenkontakte, reduziert damit Entlackungs- und Schweißaufwand, verbessert Kontaktzuverlässigkeit, mechanische Festigkeit und ermöglicht kostengünstigere, automatisierte Fertigungsprozesse in der Produktion.

Ein Anordnen der Anschlussabschnitte in den Aufnahmeräumen kann jedoch dadurch erschwert sein, dass die Anschlussabschnitte fertigungsbedingte Positionstoleranzen aufweisen.

Der Erfindung liegt die Aufgabe zugrunde, eine montagefreundliche Möglichkeit zum Anschließen von Anschlussabschnitten eines Stators anzugeben.

Diese Aufgabe wird erfindungsgemäß gelöst durch eine Anschlusseinheit für einen Stator mit einer eine Anzahl N Stränge aufweisenden Statorwicklung, aufweisend erste bis N-te Kontaktabschnitte, die jeweils zum elektrisch leitfähigen Kontaktieren eines von N Anschlussabschnitten des Stators eingerichtet sind, einen Aufnahmeraum zum Aufnehmen eines der Anschlussabschnitte ausbilden und eine Führung aufweisen, wobei ein jeweiliger Kontaktabschnitt eine Wand aufweist, die den Aufnahmeraum einseitig begrenzt, und die Führung des Kontaktabschnitts eine Wand aufweist, die sich an die Wand des Kontaktabschnitts anschließt und bezüglich der Wand des Kontaktabschnitts vom Aufnahmeraum wegweisend abgeschrägt ist, und eine Leiteranordnung, die entweder die ersten bis N-ten Kontaktabschnitte elektrisch leitfähig verbindet oder N Leiterabschnitte umfasst, die gegeneinander elektrisch isoliert und jeweils mit einem der Kontaktabschnitte elektrisch leitfähig verbunden sind.

Die erfindungsgemäße Anschlusseinheit für einen Stator mit einer eine Anzahl N Stränge aufweisenden Statorwicklung weist erste bis N-te Kontaktabschnitte auf. Die ersten bis N-ten Kontaktabschnitte sind jeweils zum elektrisch leitfähigen Kontaktieren eines von N Anschlussabschnitten des Stators eingerichtet. Die ersten bis N-ten Kontaktabschnitte bilden jeweils einen Aufnahmeraum zum Aufnehmen eines der Anschlussabschnitte aus. Die ersten bis N-ten Kontaktabschnitte weisen jeweils eine Führung auf. Ein jeweiliger Kontaktabschnitt weist eine Wand auf. Die Wand des Kontaktabschnitts begrenzt den Aufnahmeraum einseitig. Die Führung des Kontaktabschnitts weist eine Wand auf. Die Wand der Führung schließt sich an die Wand des Kontaktabschnitts an und ist bezüglich der Wand des Kontaktabschnitts vom Aufnahmeraum wegweisend abgeschrägt. Die Anschlusseinheit weist ferner eine Leiteranordnung auf. Die Leiteranordnung verbindet entweder die ersten bis N-ten Kontaktabschnitte elektrisch leitfähig oder umfasst N Leiterabschnitte, die gegeneinander elektrisch isoliert und jeweils mit einem der Kontaktabschnitte elektrisch leitfähig verbunden sind.

Die erfindungsgemäße Anschlusseinrichtung zeichnet sich insbesondere durch die Führung aus, welche es erlaubt, Positionstoleranzen der Anschlussabschnitte beim Anordnen der Anschlusseinheit an den Anschlussabschnitten auszugleichen. Durch die Führungen können die Anschlussabschnitte, wenn Sie fertigungsbedingt nicht exakt entsprechend den Positionen der Kontaktabschnitte ausgerichtet sind, einfacher in den Aufnahmeräumen aufgenommen oder - bildlich gesprochen - eingefangen werden. Dadurch kann das Anordnen der Anschlussabschnitte in den Kontaktabschnitten ganz erheblich erleichtert und einfach automatisiert werden. Es kann insbesondere auf zusätzliche Werkzeuge verzichtet werden, welche die Anschlussabschnitte in einer vorgegebenen Position halten, um eine herkömmliche Anschlusseinheit an den Anschlussabschnitten anzubringen. Vorteilhafterweise kann die Montage einer die Anschlusseinheit und einen Stator aufweisenden Statoranordnung bzw. elektrischen Maschine erheblich vereinfacht werden.

Benachbarte Paare der Kontaktabschnitte sind vorzugsweise äquidistant angeordnet.

Bevorzugt ist die Führung an einem der Leiteranordnung gegenüberliegenden Ende eines jeweiligen Kontaktabschnitts angeordnet. N ist typischerweise größer gleich drei, insbesondere genau gleich drei. Bevorzugt ist der N-te Kontaktabschnitt zwischen dem ersten und dem (N-1)-ten Kontaktabschnitt angeordnet. In bevorzugter Ausgestaltung sind die Kontaktabschnitte als Ausnehmungen der Leiteranordnung ausgebildet. Bevorzugt ist die Führung an die Wand des Kontaktabschnitts anschließend ausgebildet. Die erste Wand der Führung kann mit der ersten Wand des Kontaktabschnitts einen, insbesondere stumpfen, Winkel einschließen.

Bei der erfindungsgemäßen Anschlusseinheit kann vorgesehen sein, dass der N-te Kontaktabschnitt eine zweite Wand aufweist, die den Aufnahmeraum auf einer der ersten Wand gegenüberliegenden Seite einseitig begrenzt, sodass der N-te Kontaktabschnitt zum Einfassen des Anschlussabschnitts eingerichtet ist. Der N-te Kontaktabschnitt kann somit eine Referenzposition für die übrigen Kontaktabschnitte ausbilden und einen der Anschlussabschnitte beidseitig einfassen.

In bevorzugter Ausgestaltung ist vorgesehen, dass die Führung des N-ten Kontaktabschnitts eine zweite Wand aufweist, die sich an die zweite Wand des Kontaktabschnitts anschließt und bezüglich der zweiten Wand des N-ten Kontaktabschnitts vom Aufnahmeraum wegweisend abgeschrägt ist, sodass die Führung im Vergleich zu einem Abstand der ersten Wand des Kontaktabschnitts zur zweiten Wand des N-ten Kontaktabschnitts aufgeweitet ist. Dadurch kann die Führung die Positionstoleranzen des Anschlussabschnitts in zwei Richtungen ausgleichen. Die zweite Wand des Kontaktabschnitts kann mit der zweiten Wand der Führung einen, insbesondere stumpfen, Winkel einschließen. Die erste Wand und die zweite Wand der Führung können sich entlang von Geraden erstrecken, die einen spitzen Winkel, insbesondere einen Winkel zwischen 40 und 80 Grad, einschließen.

Der N-te Kontaktabschnitt kann ferner eine dritte Wand aufweisen, welche den Aufnahmeraum in einer zur ersten Wand senkrechten Richtung begrenzt. Die dritte Wand kann einen Anschlag für den in den Aufnahmeraum aufzunehmenden Anschlussabschnitt ausbilden. Bevorzugt verläuft die dritte Wand senkrecht zur zweiten Wand. Die dritte Wand kann die erste Wand und die zweite Wand verbinden.

Gemäß einer ersten bevorzugten Ausgestaltungsvariante ist der Aufnahmeraum eines jeweiligen des ersten bis (N-1)-ten Kontaktabschnitts auf einer der ersten Wand gegenüberliegenden Seite offen. Dies ermöglicht es, die Anschlussabschnitte einfach in die Aufnahmeräume aufzunehmen, wenn die Anschlussabschnitte zueinander radial ausgerichtet sind. So kann die Anschlusseinheit mittels einer senkrecht oder entlang einer Erstreckungsrichtung der Anschlussabschnitte gerichteten Linearbewegung an den Anschlussabschnitten angeordnet werden, da die bezüglich der Linearbewegung unterschiedlich ausgerichteten Anschlussabschnitte nicht an der offenen Seite verkanten können.

Gemäß einer zweiten bevorzugten Ausgestaltungsvariante weisen die ersten bis (N-1)-ten Kontaktabschnitte jeweils eine der ersten Wand gegenüberliegende zweite Wand auf, die vom Aufnahmeraum wegweisend abgeschrägt ist. Dies ermöglicht es, die Anschlussabschnitte einfach in die Aufnahmeräume aufzunehmen, wenn die Anschlussabschnitte zueinander radial ausgerichtet sind. So kann die Anschlusseinheit mittels einer senkrecht oder entlang einer Erstreckungsrichtung der Anschlussabschnitte gerichteten Linearbewegung an den Anschlussabschnitten angeordnet werden, da die bezüglich der Linearbewegung unterschiedlich ausgerichteten Anschlussabschnitte nicht an der zweiten Wand verkanten, sondern an ihr entlangleiten können. Bevorzugt ist die zweite Wand des Kontaktabschnitts zum N-ten Kontaktabschnitt hinweisend abgeschrägt.

Gemäß einer dritten bevorzugten Ausgestaltungsvariante weist ein jeweiliger der ersten bis (N-1)-ten Kontaktabschnitte eine zweite Wand auf, die den Aufnahmeraum auf einer der ersten Wand gegenüberliegenden Seite einseitig begrenzt, sodass der jeweilige Kontaktabschnitt zum Einfassen des Anschlussabschnitts eingerichtet ist. Besonders bevorzugt sind die ersten und zweiten Wände der N Kontaktabschnitte parallel zueinander ausgerichtet sind. So kann die Anschlusseinheit mittels einer senkrecht oder entlang einer Erstreckungsrichtung der Anschlussabschnitte gerichteten Linearbewegung an den Anschlussabschnitten angeordnet werden, wenn die Anschlussabschnitte parallel zueinander ausgerichtet sind.

Dabei ist es bevorzugt, dass die Führungen eines jeweiligen der ersten bis (N-1)-ten Kontaktabschnitte jeweils eine zweite Wand aufweisen, die sich an die zweite Wand des Kontaktabschnitts anschließt und bezüglich der zweiten Wand des jeweiligen Kontaktabschnitts vom Aufnahmeraum wegweisend abgeschrägt ist, sodass die Führung im Vergleich zu einem Abstand der ersten Wand des Kontaktabschnitts zur zweiten Wand des jeweiligen Kontaktabschnitts aufgeweitet ist. Die zweite Wand des Kontaktabschnitts kann mit der zweiten Wand der Führung einen, insbesondere stumpfen, Winkel einschließen. Die erste Wand und die zweite Wand der Führung können sich entlang von Geraden erstrecken, die einen spitzen Winkel, insbesondere einen Winkel zwischen 40 und 80 Grad, einschließen. Die Führungen der ersten bis N-ten Kontaktabschnitte können gleichartig ausgebildet sein.

Es kann ferner vorgesehen sein, dass die ersten bis (N-1)-ten Kontaktabschnitte jeweils eine weitere Wand aufweisen, welche den Aufnahmeraum in einer zur ersten Wand senkrechten Richtung begrenzt. Die weitere Wand kann einen Anschlag für den in den Aufnahmeraum aufzunehmenden Anschlussabschnitt ausbilden. Wenn der Kontaktabschnitt die zweite Wand aufweist, kann vorgesehen sein, dass die weitere Wand senkrecht zur zweiten Wand verläuft und/oder die erste Wand und die zweite Wand verbindet.

Bevorzugt ist die Leiteranordnung der Anschlusseinheit als Stromschiene ausgebildet, wenn die Leiteranordnung die Kontaktabschnitte elektrisch leitfähig verbindet. Wenn die Leiteranordnung die Leiterabschnitte umfasst, kann ein jeweiliger Leiterabschnitt als Stromschiene ausgebildet sein.

Die erfindungsgemäße Anschlusseinheit umfasst ferner einen Isolationskörper, der an der Leiteranordnung angeordnet, insbesondere angeformt, ist und die Kontaktabschnitte freilegende Öffnungen aufweist. Der Isolationskörper kann durch eine die Leiteranordnung abschnittsweise und/oder zusammenhängend umgebende Umhüllung ausgebildet sein. Der Isolationskörper ist bevorzugt durch Umspritzen der Leiteranordnung ausgebildet. Der Isolationskörper kann ferner Relativpositionen der Leiterabschnitte zueinander festlegen.

Die erfindungsgemäße Anschlusseinheit weist einen Befestigungsabschnitt auf, der dazu eingerichtet ist, mit einem Befestigungsabschnitt einer weiteren Anschlusseinheit derart ineinanderzugreifen, dass die Anschlusseinheit und die weitere Anschlusseinheit aus einer losen Stellung in eine befestigte Stellung überführbar sind, in welcher die Anschlusseinheit und die weitere Anschlusseinheit aneinander befestigt sind und die Leiteranordnung der Anschlusseinheit und eine Leiteranordnung der weiteren Anschlusseinheit gegeneinander elektrisch isoliert sind. Auf die weitere Anschlusseinheit lassen sich alle Ausführungen zur erfindungsgemäßen Anschlusseinheit übertragen.

In der befestigten Stellung können die Kontaktabschnitte der Anschlusseinheit und der weiteren Anschlusseinheit mit den Anschlussabschnitten der Statorwicklung kontaktiert sein. Dies erlaubt es, die Anschlussabschnitte ohne zusätzliche Werkzeuge, welche die Anschlussabschnitte positionieren, an den Anschlusseinheiten, beispielsweise durch Schweißen, zu befestigen. Dadurch kann die Montagefreundlichkeit weiter erhöht werden.

Der Befestigungsabschnitt kann ein Rastelement ausbilden, das dazu eingerichtet ist, mit einem Rastelement des Befestigungsabschnitts der weiteren Anschlusseinheit in der befestigten Stellung unter Ausbildung einer Rastverbindung ineinanderzugreifen. Die Rastverbindung erlaubt dabei eine aufwandsarme Befestigung der Anschlusseinheiten aneinander ohne zusätzliche Werkzeuge. Das Rastelement kann dazu eingerichtet sein, beim Übergang aus der losen Stellung in die befestigte Stellung elastisch verformt zu werden. Es ist möglich, dass der Befestigungsabschnitt ferner ein oder mehrere weitere entsprechende Rastelemente ausbildet.

Alternativ oder zusätzlich kann vorgesehen sein, dass der Befestigungsabschnitt einen Vorsprung ausbildet oder eine Ausnehmung ausbildet, wobei der Vorsprung mit einem als Ausnehmung ausgebildeten Befestigungsabschnitt der weiteren Anschlusseinheit korrespondieren kann oder die Ausnehmung mit einem als Vorsprung ausgebildeten Befestigungsabschnitt der weiteren Anschlusseinheit korrespondieren kann. Die Befestigungsabschnitte können in der befestigten Stellung unter Ausbildung eines Formschlusses ineinanderzugreifen. Der Vorsprung und die Ausnehmung sind bevorzugt gegengleich ausgebildet. Der Befestigungsabschnitt kann ein oder mehrere weitere Vorsprünge und Ausnehmungen aufweisen.

Bevorzugt bildet der Isolationskörper der erfindungsgemäßen Anschlusseinheit den Befestigungsabschnitt aus. Dabei kann vorgesehen sein, dass der Isolationskörper oder die Leiteranordnung der weiteren Anschlusseinheit ihren Befestigungsabschnitt ausbildet. Alternativ bildet die Leiteranordnung der erfindungsgemäßen Anschlusseinheit den Befestigungsabschnitt aus. Dabei kann vorgesehen sein, dass der Isolationskörper der weiteren Anschlusseinheit ihren Befestigungsabschnitt ausbildet.

Die der Erfindung zugrunde liegende Aufgabe wird ferner gelöst durch eine Statoranordnung für eine elektrische Maschine, aufweisend: einen Stator, aufweisend einen Statorkern mit einer axialen Stirnseite und eine Statorwicklung, die eine Anzahl N Stränge aufweist und abschnittsweise aus Formleitern, die sich durch den Statorkern erstrecken, und aus ersten bis N-ten Anschlussabschnitten, die sich an der Stirnseite an einen Teil der Formleiter anschließend an unterschiedlichen Winkelpositionen einer Umfangsrichtung in Axialrichtung erstrecken und entweder zur Ausbildung eines Sternpunkts oder zur Ausbildung von Anschlüssen für die Stränge eingerichtet sind, ausgebildet ist; und eine erfindungsgemäße Anschlusseinheit; wobei die ersten bis N-ten Anschlussabschnitte jeweils im Aufnahmeraum eines Kontaktabschnitts der Anschlusseinheit aufgenommen sind.

Die erfindungsgemäße Statoranordnung für eine elektrische Maschine weist einen Stator auf. Der Stator weist einen Statorkern auf. Der Statorkern weist eine axiale Stirnseite auf. Der Stator weist ferner eine Statorwicklung auf. Die Statorwicklung weist eine Anzahl N Stränge auf. Die Statorwicklung ist abschnittsweise aus Formleitern ausgebildet. Die Formleiter erstrecken sich durch den Statorkern. Die Statorwicklung ist ferner abschnittsweise aus ersten bis N-ten Anschlussabschnitten ausgebildet. Die ersten bis N-ten Anschlussabschnitte erstrecken sich an der Stirnseite an einen Teil der Formleiter anschließend an unterschiedlichen Winkelpositionen einer Umfangsrichtung in Axialrichtung. Die ersten bis N-ten Anschlussabschnitte sind entweder zur Ausbildung eines Sternpunkts oder zur Ausbildung von Anschlüssen für die Stränge eingerichtet. Die Statoranordnung weist ferner eine erfindungsgemäße Anschlusseinheit auf. Die ersten bis N-ten Anschlussabschnitte sind jeweils im Aufnahmeraum eines Kontaktabschnitts der Anschlusseinheit aufgenommen.

Der Statorkern ist bevorzugt durch eine Vielzahl von gegeneinander isolierten Statorblechen ausgebildet. Im Statorkern kann eine Vielzahl von entlang der Umfangsrichtung angeordneten Nuten ausgebildet sich, die sich von der Stirnseite zu einer axial gegenüberliegenden weiteren Stirnseite erstrecken. In den Nuten können die Formleiter aufgenommenen sein.

Die Formleiter sind bevorzugt durch Stäbe aus einem elektrisch leitfähigen Metall, insbesondere Kupfer, ausgebildet. Bevorzugt sind die Formleiter in einer vorgegebenen geraden Anzahl von Schichten, insbesondere vier, sechs, acht, zehn oder zwölf Schichten, radial geschichtet in einer jeweiligen Nut angeordnet. Die Anzahl der Stränge entspricht typischerweise einer Anzahl von Phasen des Stators.

Die Statorwicklung kann als Haarnadelwicklung ausgebildet sein. An der ersten Stirnseite und einer der ersten Stirnseite gegenüberliegenden zweiten Stirnseite können die Formleiter eines jeweiligen Strangs durch Verbinder derart miteinander elektrisch leitfähig verbunden sein, dass sie eine Reihenschaltung oder mehrere Reihenschaltungen ausbilden. Bevorzugt sind Verbinder erster Art an der ersten Stirnseite einstückig mit den Formleitern ausgebildet. An der zweiten Stirnseite können Paare von Formleitern durch Verbinder zweiter Art elektrisch leitfähig verbunden sein. Die Verbinder zweiter Art können jeweils zwei sich an die Formleiter des Paares, insbesondere einstückig, anschließende Verbindungsabschnitte aufweisen. Die Verbindungsabschnitte können paarweise miteinander, insbesondere stoffschlüssig, elektrisch leitfähig verbunden sein.

Jeder Anschlussabschnitt kann mehrere Anschlusselemente umfassen, die sich jeweils an einen der Formleiter anschließen. Bevorzugt weist jeder Anschlussabschnitt für jede Reihenschaltung des Strangs ein Anschlusselement auf.

Bei der erfindungsgemäßen Statoranordnung kann ferner vorgesehen sein, dass die Leiteranordnung der ersten Anschlusseinheit die Kontaktabschnitte elektrisch leitfähig zur Ausbildung eines Sternpunkts verbindet, wobei die Statoranordnung ferner aufweist: eine erfindungsgemäße zweite Anschlusseinheit, deren Leiteranordnung N Leiterabschnitte umfasst, die gegeneinander elektrisch isoliert und jeweils zur Ausbildung eines Anschlusses für einen der Stränge mit einem der N Kontaktabschnitte elektrisch leitfähig verbunden sind, wobei die (N+1)-ten bis (2N)-ten Anschlussabschnitte jeweils im Aufnahmeraum eines Kontaktabschnitts der zweiten Anschlusseinheit aufgenommen sind.

Es kann vorgesehen sein, dass die ersten bis N-ten Anschlussabschnitte und/oder die (N+1)-ten bis (2N)-ten Anschlussabschnitte des Stators an ihrer jeweiligen Winkelposition in Umfangsrichtung radial ausgerichtet sind.

Bei dem Stator können die Anschlussabschnitte ein Paar paralleler Seitenflächen aufweisen. Dabei kann vorgesehen sein, dass die ersten bis (N-1)-ten Anschlussabschnitte gegenüber dem N-ten Anschlussabschnitt, derart verformt sind, dass die Paare paralleler Seitenflächen der ersten bis N-ten Anschlussabschnitte im Wesentlichen parallel zueinander ausgerichtet sind. Alternativ oder zusätzlich können die (N+1)-ten bis (2N-1)-ten Anschlussabschnitte gegenüber dem (2N)-ten Anschlussabschnitt, derart verformt sein, dass die Paare paralleler Seitenflächen der (N+1)-ten bis (2N)-ten Anschlussabschnitte im Wesentlichen parallel zueinander ausgerichtet sind. Die ersten bis N-ten Anschlussabschnitte bzw. die (N+1)-ten bis (2N-ten) Anschlussabschnitte können derart gleich orientiert sind, dass ihre Paare paralleler Seitenflächen im Wesentlichen parallel zueinander ausgerichtet sind.

Die Paare paralleler Seitenflächen der ersten bis (2N)-ten Anschlussabschnitte können parallel zueinander ausgerichtet sein. Es ist aber bevorzugt, dass die Paare paralleler Seitenflächen der ersten bis N-ten Anschlussabschnitte einerseits und die Paare paralleler Seitenflächen der (N+1)-ten bis (2N)-ten Anschlussabschnitte andererseits unterschiedlich ausgerichtet sind, insbesondere einen Winkel größer als null einschließen.

In bevorzugter Ausgestaltung sind die Anschlussabschnitte durch Torsion um eine zu einer Längsachse des Stators parallele Achse verformt. Dazu können die ersten bis (N-1)-ten Anschlussabschnitte und/oder die (N+1)-ten bis (2N-1)-ten Anschlussabschnitte einen Torsionsabschnitt aufweisen, welcher die Torsion ausbildet.

Bei der erfindungsgemäßen Statoranordnung ist ein Befestigungsmittel vorgesehen ist, durch welches die erste Anschlusseinheit und die zweite Anschlusseinheit aus einer losen Stellung in eine befestigte Stellung überführbar sind, in welcher die erste Anschlusseinheit und die zweite Anschlusseinheit aneinander befestigt sind und die Leiteranordnung der ersten Anschlusseinheit und die Leiteranordnung der zweiten Anschlusseinheit gegeneinander elektrisch isoliert sind.

Das Befestigungsmittel ist durch die Befestigungsabschnitte der ersten und zweiten Anschlusseinheiten ausgebildet sein. Dabei kann die in Bezug auf die erfindungsgemäße Anschlusseinheit als weitere Anschlusseinheit beschriebene Anschlusseinheit die zweite Anschlusseinheit der Statoranordnung sein.

Das Befestigungsmittel kann alternativ dazu eingerichtet sein, die erste Anschlusseinheit und die zweite Anschlusseinheit in der befestigten Stellung durch eine auf die erste Anschlusseinheit und die zweite Anschlusseinheit wirkende Kraft zusammen zu zwingen, sodass die Anschlussabschnitte des Stators an den Kontaktabschnitten elektrisch leitend, insbesondere durch stoffschlüssiges Verfügen, befestigbar sind. Bei dieser Ausgestaltung ist das Befestigungsmittel also als zusätzliche, von den Anschlusseinheiten separate Komponente vorgesehen. Vorzugsweise ist das Befestigungsmittel in der befestigten Stellung von den Anschlusseinheiten lösbar und vorzugsweise in die lose Stellung zurückführbar.

Die der Erfindung zugrunde liegende Aufgabe wird ferner gelöst durch ein Verfahren zur Herstellung einer Statoranordnung, umfassend folgende Schritte: Bereitstellen einer erfindungsgemäßen Anschlusseinheit; Bereitstellen eines Stators für eine elektrische Maschine, aufweisend einen Statorkern mit einer axialen Stirnseite und eine Statorwicklung, die eine Anzahl N Stränge aufweist und abschnittsweise aus Formleitern, die sich durch den Statorkern erstrecken, und aus ersten bis N-ten Anschlussabschnitten, die sich an der Stirnseite an einen Teil der Formleiter anschließend an unterschiedlichen Winkelpositionen einer Umfangsrichtung in Axialrichtung erstrecken und entweder zur Ausbildung eines Sternpunkts oder zur Ausbildung von Anschlüssen für die Stränge eingerichtet sind, ausgebildet ist; und Anordnen der ersten bis N-ten Anschlussabschnitte des Stators in den Aufnahmeräumen der Kontaktabschnitte der Anschlusseinheit. Das Anordnen kann durch Durchführen einer Relativbewegung der Anschlusseinheit entlang einer im Wesentlichen senkrecht oder parallel, insbesondere senkrecht oder parallel, zu einer Erstreckungsrichtung der Anschlussabschnitte verlaufenden Bewegungsrichtung erfolgen.

Bei dem erfindungsgemäßen Verfahren kann ferner vorgesehen sein, dass die ersten bis N-ten Anschlussabschnitte zur Ausbildung eines Sternpunkts eingerichtet sind, wobei die Statorwicklung ferner abschnittsweise aus (N+1)-ten bis (2N)-ten Anschlussabschnitten, die sich an der Stirnseite an einen Teil der Formleiter anschließend an unterschiedlichen Winkelpositionen einer Umfangsrichtung in Axialrichtung erstrecken und zur Ausbildung von Anschlüssen für die Stränge eingerichtet sind, gebildet ist, wobei das Verfahren ferner folgende Schritte umfassen kann: Bereitstellen einer erfindungsgemäßen zweiten Anschlusseinheit, deren Leiteranordnung N Leiterabschnitte umfasst, die gegeneinander elektrisch isoliert und jeweils zur Ausbildung eines Anschlusses für einen der Stränge mit einem der N Kontaktabschnitte elektrisch leitfähig verbunden sind; und Anordnen der (N+1)-ten bis (2N)-ten Anschlussabschnitte des Stators in den Aufnahmeräumen der Kontaktabschnitte der zweiten Anschlusseinheit. Das Anordnen kann durch Durchführen einer Relativbewegung der zweiten Anschlusseinheit entlang einer im Wesentlichen senkrecht oder parallel, insbesondere senkrecht oder parallel, zu einer Erstreckungsrichtung der Anschlussabschnitte verlaufenden Bewegungsrichtung erfolgen.

Es kann ferner folgender Schritt vorgesehen sein: Verfügen der Anschlussabschnitte und der Kontaktabschnitte, insbesondere unter Ausbildung stoffschlüssiger Fügeverbindungen. Bevorzugt erfolgt das Verfügen mittels Schweißens.

Außerdem kann folgender Schritt vorgesehen sein: Überführen der ersten Anschlusseinheit und der zweiten Anschlusseinheit aus einer losen Stellung in eine befestigte Stellung mittels eines Befestigungsmittels oder mittels durch die Anschlusseinheiten ausgebildeter Befestigungsabschnitte, wobei die erste Anschlusseinheit und die zweite Anschlusseinheit in der befestigten Stellung aneinander befestigt sind und die Leiteranordnung der ersten Anschlusseinheit und die Leiteranordnung der zweiten Anschlusseinheit gegeneinander elektrisch isoliert sind.

Insbesondere wenn das Befestigungsmittel nicht durch die Anschlusseinheiten ausgebildet ist, kann ferner ein Schritt des Entfernens des Befestigungsmittels durch Überführen aus der befestigten Stellung in die lose Stellung nach dem Verfügen der Anschlussabschnitte und der Kontaktabschnitte vorgesehen sein.

Sämtliche Ausführungen zur erfindungsgemäßen Anschlusseinheit lassen sich auf das erfindungsgemäße Verfahren übertragen, sodass auch mit diesem die zuvor beschriebenen Vorteile erzielt werden können.

Die der Erfindung zugrunde liegende Aufgabe wird ferner gelöst durch eine elektrische Maschine zum Antreiben eines Fahrzeugs, aufweisend: eine erfindungsgemäße Statoranordnung oder eine durch das erfindungsgemäße Verfahren erhaltene Statoranordnung; und einen innerhalb des Stators drehbar gelagerten Rotor.

Die elektrische Maschine ist bevorzugt als Synchronmaschine oder als Asynchronmaschine ausgebildet. Der Rotor ist bevorzugt permanent erregt.

Weitere Vorteile und Einzelheiten der vorliegenden Erfindung ergeben sich aus den im Folgenden beschriebenen Ausführungsbeispielen sowie anhand der Zeichnungen. Diese sind schematische Darstellungen und zeigen:
- Fig. 1: eine Draufsicht auf ein erstes Ausführungsbeispiel der erfindungsgemäßen Anschlusseinheit;
- Fig. 2: eine Detailansicht eines Kontaktabschnitts der Anschlusseinheit gemäß dem ersten Ausführungsbeispiel;
- Fig. 3: eine Draufsicht auf ein zweites Ausführungsbeispiel der erfindungsgemäßen Anschlusseinheit;
- Fig. 4: eine Seitenansicht eines Ausführungsbeispiels der erfindungsgemäßen Statoranordnung mit dem ersten und zweiten Ausführungsbeispiel der Anschlusseinheit;
- Fig. 5: eine perspektivische Detailansicht der Anschlusseinheiten in der befestigten Stellung;
- Fig. 6 bis 8: jeweils eine Draufsicht auf die Anschlusseinheiten beim Übergang von einer losen Stellung in eine befestigte Stellung;
- Fig. 9: eine Draufsicht auf ein drittes Ausführungsbeispiel der erfindungsgemäßen Anschlusseinheit;
- Fig. 10: eine Draufsicht auf ein viertes und ein fünftes Ausführungsbeispiel der erfindungsgemäßen Anschlusseinheit;
- Fig. 11: eine Draufsicht auf ein weiteres Ausführungsbeispiel der erfindungsgemäßen Statoranordnung mit einem sechsten und einem siebten Ausführungsbeispiel der erfindungsgemäßen Anschlusseinheit;
- Fig. 12: eine stirnseitige Detailansicht eines Stators eines weiteren Ausführungsbeispiels der erfindungsgemäßen Statoranordnung;
- Fig. 13 bis 15: jeweils eine Draufsicht auf zwei Anschlusseinheiten gemäß einem achten und einem neunten Ausführungsbeispiel für die in Fig. 12 gezeigte Statoranordnung beim Übergang von einer losen Stellung in eine befestigte Stellung; und
- Fig. 16: eine Prinzipskizze eines Fahrzeugs mit einem Ausführungsbeispiel der erfindungsgemäßen elektrischen Maschine.

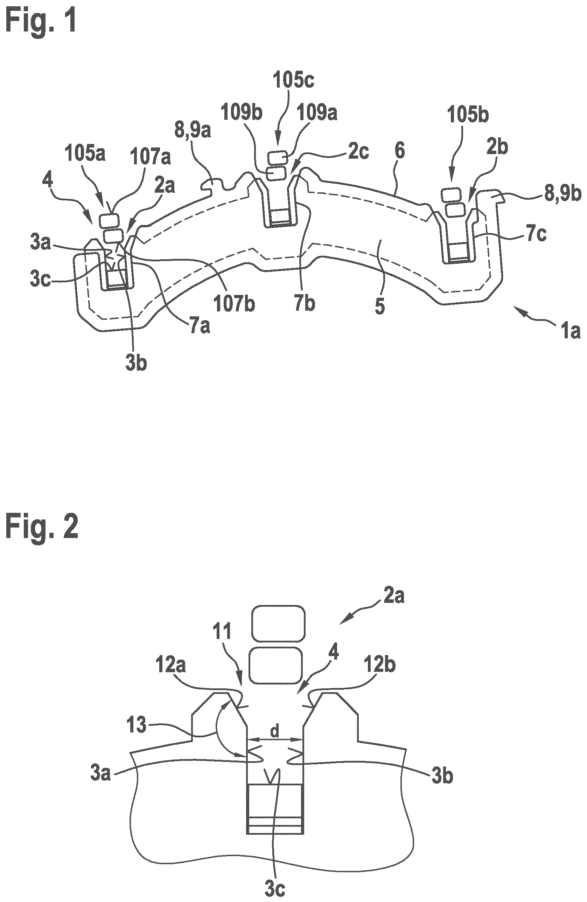

Fig. 1 ist eine Draufsicht auf ein erstes Ausführungsbeispiel einer Anschlusseinheit 1a.

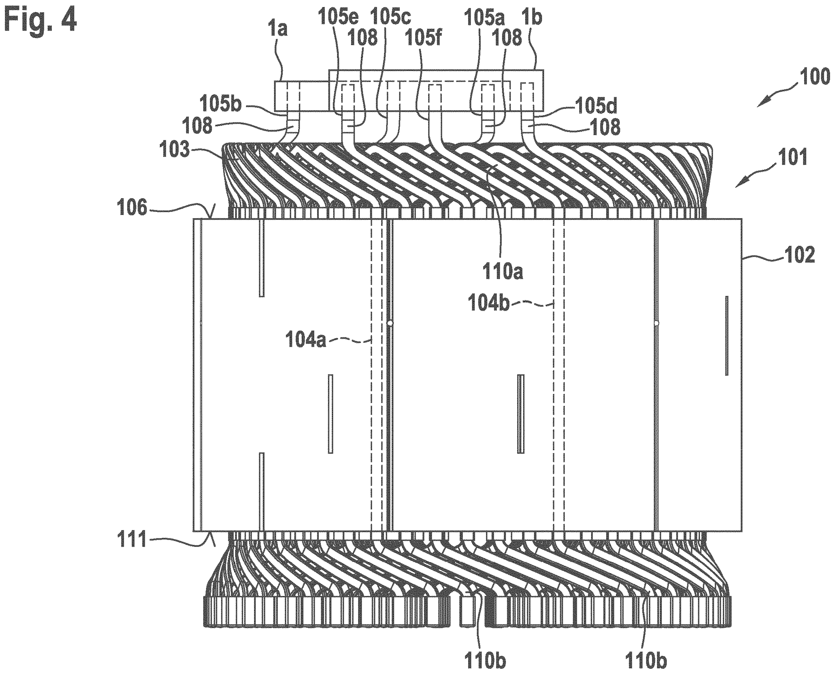

Die Anschlusseinheit 1a weist drei Kontaktabschnitte 2a, 2b, 2c auf. Jeder Kontaktabschnitt 2a, 2b, 2c weist eine erste Wand 3a und eine zweite Wand 3b auf, die in Fig. 1 repräsentativ für die Kontaktabschnitte 2b, 2c beim Kontaktabschnitt 2a mit Bezugszeichen versehen sind. Jeder Kontaktabschnitt 2a, 2b, 2c bildet einen Aufnahmeraum 4 aus, der zum Einfassen eines von drei Anschlussabschnitten 105a, 105b, 105c eines Stators 101 (siehe Fig. 4) eingerichtet ist und durch die erste Wand 3a und die zweite Wand 3b begrenzt ist. Die Wände 3a, 3b aller Kontaktabschnitte 2a, 2b, 2c sind dabei parallel zueinander ausgerichtet. Darüber hinaus weist jeder Kontaktabschnitt 2a, 2b, 2c eine dritte Wand 3c auf, welche senkrecht zur ersten Wand 3a und zur zweiten Wand 3b verläuft und den Aufnahmeraum ebenfalls begrenzt.

Daneben weist die Anschlusseinheit 1a eine Leiteranordnung 5 auf, welche die Kontaktabschnitte 2a, 2b, 2c elektrisch leitfähig verbindet. Die Leiteranordnung 5 ist dazu als, hier exemplarisch bogenförmige bzw. sichelförmige, Stromschiene ausgebildet. Die Kontaktabschnitte 2a, 2b, 2c sind als Ausnehmungen der Leiteranordnung 5 bzw. der Stromschiene ausgebildet.

Die Anschlusseinheit 1a umfasst ferner einen Isolationskörper 6, der an der Leiteranordnung 5 angeordnet ist und die Kontaktabschnitte 2a, 2b, 2c freilegende Öffnungen 7a, 7b, 7c aufweist. Im vorliegenden Ausführungsbeispiel ist der Isolationskörper 6 an der Leiteranordnung 5 angeformt und durch eine die Leiteranordnung 5 abschnittsweise umgebende und zusammenhängend Umhüllung ausgebildet. Der Isolationskörper 6 ist aus einem elektrisch isolierenden Werkstoff, beispielsweise einem Kunststoff, gebildet.

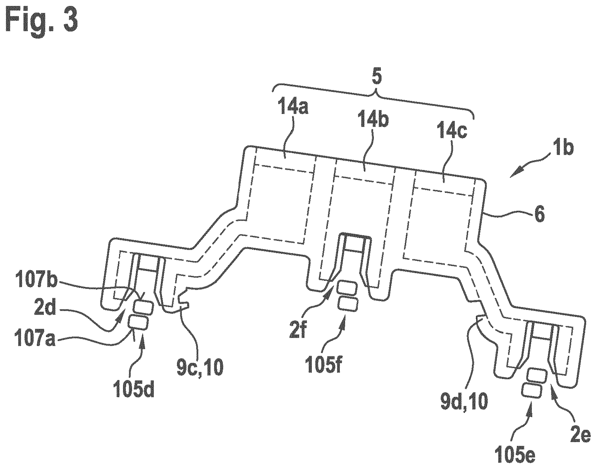

In Fig. 1 ist ferner ein Befestigungsabschnitt 8 der Anschlusseinheit 1a dargestellt. Der Befestigungsabschnitt 8 ist hier exemplarisch durch zwei Rastelemente 9a, 9b ausgebildet. Der Befestigungsabschnitt 8 ist dazu eingerichtet, mit einem Befestigungsabschnitt 10 einer weiteren Anschlusseinheit 1b (siehe Fig. 3) derart ineinanderzugreifen, dass die Anschlusseinheit 1a und die weitere Anschlusseinheit 1b aus einer losen Stellung in eine befestigte Stellung überführbar sind. In der befestigten Stellung sind die Anschlusseinheit 1a und die weitere Anschlusseinheit 1b aneinander befestigt und die Leiteranordnung 5 der Anschlusseinheit 1a und eine Leiteranordnung 5 (siehe Fig. 3) der weiteren Anschlusseinheit 1b gegeneinander elektrisch isoliert. Der Befestigungsabschnitt 8 ist im vorliegenden Ausführungsbeispiel durch den Isolationskörper 6 ausgebildet.

Fig. 2 ist eine Detailansicht des Kontaktabschnitts 2a, dessen Darstellung repräsentativ für die weiteren Kontaktabschnitte 2b, 2c ist.

Die Anschlusseinheit 1a zeichnet sich dadurch aus, dass der Kontaktabschnitt 2a eine Führung 11 aufweist, die im Vergleich zu einem Abstand d der ersten Wand 3a zur zweiten Wand 3b aufgeweitet ist. Die Führung 11 schließt sich dabei an die erste Wand 3a und die zweite Wand 3b auf einer der dritten Wand 3c gegenüberliegenden Seite der ersten Wand 3a und der zweiten Wand 3b an. Die Führung 11 weist ihrerseits eine erste Wand 12a und eine zweite Wand 12b auf. Die erste Wand 12a der Führung 11 schließt sich an der der dritten Wand 3c gegenüberliegenden Seite an die erste Wand 3a des Kontaktabschnitts 2a an. Die zweite Wand 12b der Führung 11 schließt sich auf der der dritten Wand 3c gegenüberliegenden Seite an die zweite Wand 3b des Kontaktabschnitts 2a an. Die erste Wand 12a und die erste Wand 3a schließen einen stumpfen Winkel 13 ein. Ebenso schließen die zweite Wand 3b und die zweite Wand 12b einen stumpfen Winkel ein. Die Wände 12a, 12b der Führung 11 erstrecken sich jeweils entlang einer Geraden. Die Geraden schneiden sich unter einen spitzen Winkel von etwa 60 Grad.

Fig. 3 ist eine Draufsicht auf ein zweites Ausführungsbeispiel einer Anschlusseinheit 1b. Soweit im Folgenden nichts Abweichendes beschrieben ist, lassen sich alle Ausführungen zum ersten Ausführungsbeispiel auf das zweite Ausführungsbeispiel übertragen.

Beim zweiten Ausführungsbeispiel ist die Leiteranordnung 5 durch eine der Anzahl der Kontaktabschnitte 2d, 2e, 2f entsprechende Anzahl von Leiterabschnitten 14a, 14b, 14c ausbildet. Die Leiterabschnitte 14a, 14b, 14c sind gegeneinander elektrisch isoliert und jeweils mit einem der Kontaktabschnitte 2d, 2e, 2f elektrisch leitfähig verbunden. Beim zweiten Ausführungsbeispiel ist jeder Leiterabschnitt 14a, 14b, 14c durch eine Stromschiene ausgebildet. Der Isolationskörper 6 isoliert die Leiterabschnitte 14a, 14b, 14b gegeneinander und legt die Relativposition der Leiterabschnitte 14a, 14b, 14c zueinander fest.

Die Anschlusseinheit 1b gemäß dem zweiten Ausführungsbeispiel weist ebenfalls einen Befestigungsabschnitt 10 auf, der durch Rastelemente 9c, 9d ausgebildet ist.

Fig. 4 ist eine Seitenansicht eines Ausführungsbeispiels einer Statoranordnung 100. Die Statoranordnung 100 weist einen Stator 101, eine erste Anschlusseinheit 1a gemäß dem ersten Ausführungsbeispiel und eine zweite Anschlusseinheit 1b gemäß dem zweiten Ausführungsbeispiel auf.

Der Stator 101 weist einen Statorkern 102 auf, der hier exemplarisch aus einer Vielzahl von axial geschichteten und gegeneinander elektrisch isolierten Statorblechen aus einem weichmagnetischen Werkstoff gebildet ist. Daneben weist der Stator 101 eine Statorwicklungen 103, die als Haarnadelwicklung ausgebildet ist, auf. Die Statorwicklung 103 weist hier exemplarisch drei Stränge auf und ist abschnittsweise aus Formleitern 104a, 104b, die sich durch den Statorkern 102 erstrecken gebildet. Die Statorwicklung 103 ist ferner abschnittsweise aus ersten bis sechsten Anschlussabschnitten 105a bis 105f, die sich an einer ersten Stirnseite 106 des Statorkerns 102 an einen Teil der Formleiter 104a, 104b anschließend an unterschiedlichen Winkelposition einer Umfangsrichtung in Axialrichtung erstrecken.

Die ersten bis dritten Anschlussabschnitte 105a, 105b, 105c sind zur Ausbildung eines Sternpunkts eingerichtet. Die vierten bis sechsten Anschlussabschnitte 105d, 105e, 105f sind jeweils zur Ausbildung eines Anschlusses für die Stränge eingerichtet. Die ersten bis dritten Anschlussabschnitte 105a, 105b, 105c sind exemplarisch radial innen an der jeweiligen Winkelposition angeordnet. Die vierten bis sechsten Anschlussabschnitte 105d, 105e, 105f sind exemplarisch radial außen an einer jeweiligen der Winkelposition angeordnet.

Mit Bezug zu Fig. 1 und Fig. 3 weist ein Querschnitt eines jeweiligen Anschlussabschnitts 105a-f zwei parallele Seiten auf. Die zugehörigen Seitenflächen 107a, 107 b erstrecken sich in die Papierebene. Aus Gründen der Übersichtlichkeit sind hier lediglich bei der erste Anschlussabschnitt 105a in Fig. 1 und der vierte Anschlussabschnitt 105d in Fig. 3 mit Bezugszeichen versehen sind. Bei dem Stator 101 sind die ersten und zweiten Anschlussabschnitte 105a, 105b gegenüber dem dritten Anschlussabschnitt 105c derart verformt, dass die Paare paralleler Seitenflächen 107a, 107b der ersten bis dritten Anschlussabschnitte 105a, 105b, 105c im Wesentlichen parallel zueinander ausgerichtet sind. Ohne diese Verformung wären die Anschlussabschnitte 105a, 105b, 105c wegen der im Wesentlichen zylindersymmetrischen Gestalt des Stators 101 radial ausgerichtet, sodass entsprechende Paare paralleler Seitenflächen 107a, 107b nicht parallel, sondern entsprechend ihrer Position in Umfangsrichtung schräg zueinanderstehen würden.

Desgleichen sind auch der vierte und fünfte Anschlussabschnitt 105d, 105e gegenüber dem sechsten Anschlussabschnitt 105f derart verformt, dass die Paare paralleler Seitenflächen 107a, 107b der vierten bis sechsten Anschlussabschnitte 105d, 105e, 105f im Wesentlichen parallel zueinander ausgerichtet sind. Im vorliegenden Ausführungsbeispiel sind die Paare paralleler Seitenflächen 107a, 107b aller Anschlussabschnitte 105a-f, also der ersten bis sechsten Anschlussabschnitte 105a-f, nicht parallel zueinander ausgerichtet. D. h., die Paare paralleler Seitenflächen 107a, 107b der ersten bis dritten Anschlussabschnitte 105a, 105b, 105c einerseits und die Paare paralleler Seitenflächen 107a, 107b der vierten bis sechsten Anschlussabschnitte 105d, 105e, 105f andererseits schließen miteinander einen Winkel ein, der größer als null Grad ist.

Die Anschlussabschnitte 105a, 105b, 105d, 105e sind im vorliegenden Ausführungsbeispiel durch Torsion um eine zu einer Längsachse des Stators parallele Achse verformt. Dazu sind in Fig. 4 Torsionsabschnitte 108 schematisch dargestellt, in denen der Verlauf der Anschlussabschnitte 105a, 105b, 105d, 105e die Torsion aufweist.

Im vorliegenden Ausführungsbeispiel weist die Statorwicklung 103 für jeden der Stränge zwei Reihenschaltungen von Formleitern 104a, 104b auf, die parallele Pfade des Strangs ausbilden. Jeder Anschlussabschnitt 105a-f umfasst im vorliegenden Ausführungsbeispiel zwei Anschlusselemente 109a, 109b, die in Fig. 1 aus Gründen der Übersichtlichkeit nur beim Anschlussabschnitt 105c mit einem Bezugszeichen versehen sind. Ein jeweiliges Anschlusselement 109a, 109b schließt sich dabei an einen der bezüglich einer der Reihenschaltungen äußeren Formleiter 104a, 104b einstückig an.

Die Statorwicklungen 103 ist ferner abschnittsweise durch eine Vielzahl von Verbindern erster Art 110a und Verbindern zweiter Art 110b ausgebildet. Die Formleiter 104a, 104b eines jeweiligen Strangs sind durch die Verbinder erster Art 110a und Verbinder zweiter Art 110b zu den Reihenschaltungen miteinander verbunden. Die Verbinder erster Art 110a sind einstückig mit Paaren von Formleitern 104a, 104b ausgebildet. An einer der ersten Stirnseite 106 gegenüberliegenden zweiten Stirnseite 111 des Statorkerns 102 sind Paare von nicht durch Verbinder erster Art 110a verbundenen Formleitern 104a, 104b durch die Verbinder zweiter Art 110b miteinander verbunden. Die Verbinder zweiter Art weisen dazu zwei Verbindungelemente auf. Die Verbindungselemente sind jeweils einstückig mit einem der durch den Verbinder zweiter Art 110b verbunden Formleiter 104a, 104b ausgebildet. Die Verbindungselemente sind stoffschlüssig miteinander an der zweiten Stirnseite 111 verbunden, beispielsweise durch Schweißen.

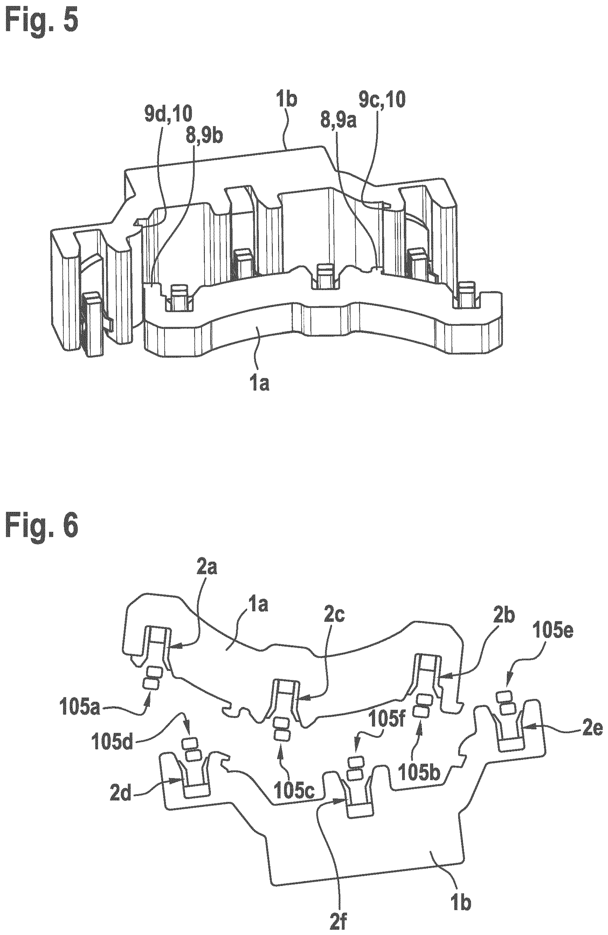

Fig. 5 ist eine perspektivische Detailansicht der Anschlusseinheiten 1a, 1b der Statoranordnung 100 in einer befestigten Stellung.

Die Befestigungsabschnitte 8, 10 der Anschlusseinheiten 1a, 1b sind in der befestigten Stellung ineinandergreifend verbunden, sodass die Rastelemente 9a, 9c und 9b, 9d zwei Rastverbindungen ausbilden.

Fig. 6 bis Fig. 8 sind jeweils eine Draufsicht auf die Anschlusseinheiten 1a, 1b beim Übergang von einer losen Stellung in die befestigte Stellung. Anhand dieser Figuren wird auch der Vorteil der Führungen 11 erläutert.

Wie Fig. 6 zu entnehmen ist, sind die Paare paralleler Seitenflächen 107a, 107b der Anschlussabschnitte 105a, 105b, 105c im Wesentlichen parallel zueinander angeordnet, wenn sie noch nicht in den Aufnahmeräumen 4 der Kontaktabschnitte 2a, 2b, 2c aufgenommen sind. Allerdings bestehen gewisse Positionstoleranzen der Anschlussabschnitte 105a bis 105c zueinander und der Anschlusselemente 109a, 109b zueinander. Dies gilt entsprechend für die Anschlussabschnitte 105d bis 105f.

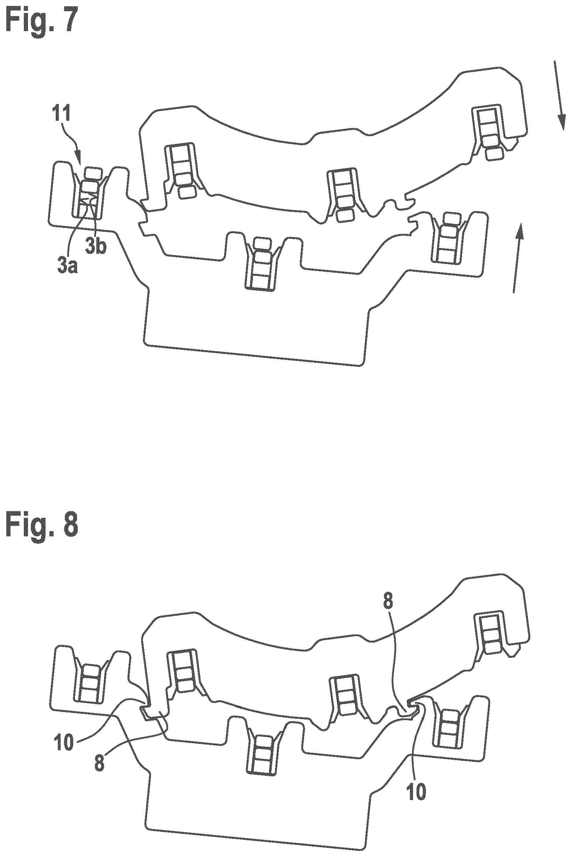

Wie Fig. 7 zu entnehmen ist, werden die Anschlusseinheiten 1a, 1b in einer zur Erstreckungsrichtung der Anschlussabschnitte 105a-f senkrechten Linearbewegungsrichtung, die durch Pfeile in Fig. 7 dargestellt ist, aufeinander zu bewegt. Dabei dienen die Führungen 11 dazu, die zuvor erwähnten Positionstoleranzen auszugleichen. Es ist zu beachten, dass die Aufnahme der Anschlussabschnitte 105a-f in die Aufnahmeräume 4 in diesem Ausführungsbeispiel durch die Verformung der Anschlussabschnitte 105a, 105b, 105d, 105e ermöglicht wird. Der erforderliche Kraftaufwand, um die Anschlussabschnitte 105a-f zwischen die parallelen Wände 3a, 3b zu führen, wäre bei einer radialen Ausrichtung der Anschlussabschnitte 105a-f nämlich zu hoch.

Fig. 8 zeigt die Anschlusseinheiten 1a, 1b in ihrer befestigten Stellung, in welcher die Befestigungsabschnitte 8, 10 analog zu Fig. 5 ineinandergreifen. In dieser Stellung können die Kontaktabschnitte 2a-f und die Anschlussabschnitte 105a-f, beispielsweise durch Schweißen, miteinander verfügt werden.

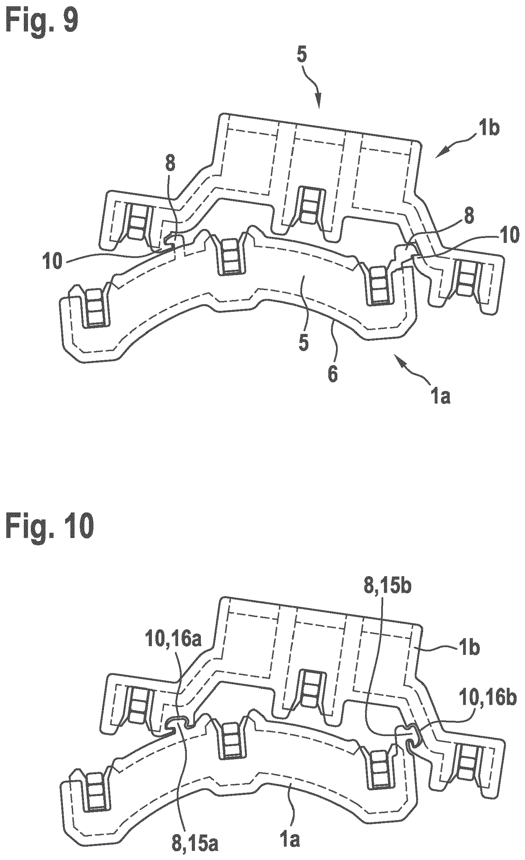

Fig. 9 ist eine Draufsicht auf ein drittes Ausführungsbeispiel einer Anschlusseinheit 1a. Die ferner gezeigte Anschlusseinheit 1b entspricht dem zweiten Ausführungsbeispiel. Sämtliche Ausführungen zum ersten Ausführungsbeispiel gemäß Fig. 1 und Fig. 2 lassen sich bis auf die im Folgenden beschriebenen Abweichungen auf das dritte Ausführungsbeispiel gemäß Fig. 9 übertragen.

Beim dritten Ausführungsbeispiel der Anschlusseinheit 1a ist der Befestigungsabschnitt 8 durch die Leiteranordnung 5 ausgebildet, die dazu aus dem Isolationskörper 6 herausragt. Gemäß einem alternativen Ausführungsbeispiel ist es auch möglich, dass der Befestigungsabschnitt 10 der Anschlusseinheit 1b durch die Leiteranordnung 5 ausgebildet ist, wenn der Befestigungsabschnitt 8 der Anschlusseinheit 1a - wie beim ersten Ausführungsbeispiel - durch den Isolationskörper 6 ausgebildet ist.

Fig. 10 ist eine Draufsicht auf ein viertes Ausführungsbeispiel einer Anschlusseinheit 1a und ein fünftes Ausführungsbeispiel einer Anschlusseinheit 1b. Dabei lassen sich alle Ausführungen zum ersten und zweiten Ausführungsbeispiel gemäß den Fig. 1 bis Fig. 3 bis auf die im Folgenden beschriebenen Abweichungen auf das vierte und fünfte Ausführungsbeispiel übertragen.

Beim vierten Ausführungsbeispiel der Anschlusseinheit 1a ist der Befestigungsabschnitt 8 durch Vorsprünge 15a, 15b ausgebildet. Beim fünften Ausführungsbeispiel der Anschlusseinheit 1b ist der Befestigungsabschnitt 10 durch Ausnehmungen 16a, 16b, die gegengleich zu den Vorsprüngen 15a, 15b ausgebildet sind, ausgebildet. Die Vorsprünge 15a, 15b und die Ausnehmungen 16a, 16b korrespondieren, vergleichbar mit zwei Puzzleteilen, miteinander, um die Anschlusseinheiten 1a, 1b mittels eines Formschlusses aneinander zu befestigen. Beim vierten und fünften Ausführungsbeispiel werden die Anschlusseinheiten 1a, 1b auch durch eine Linearbewegung ineinandergreifend verbunden, um den Formschlusses auszubilden. Die Bewegungsrichtung der Linearbewegung verläuft jedoch parallel zur Erstreckungsrichtung der Anschlussabschnitte 105a-f.

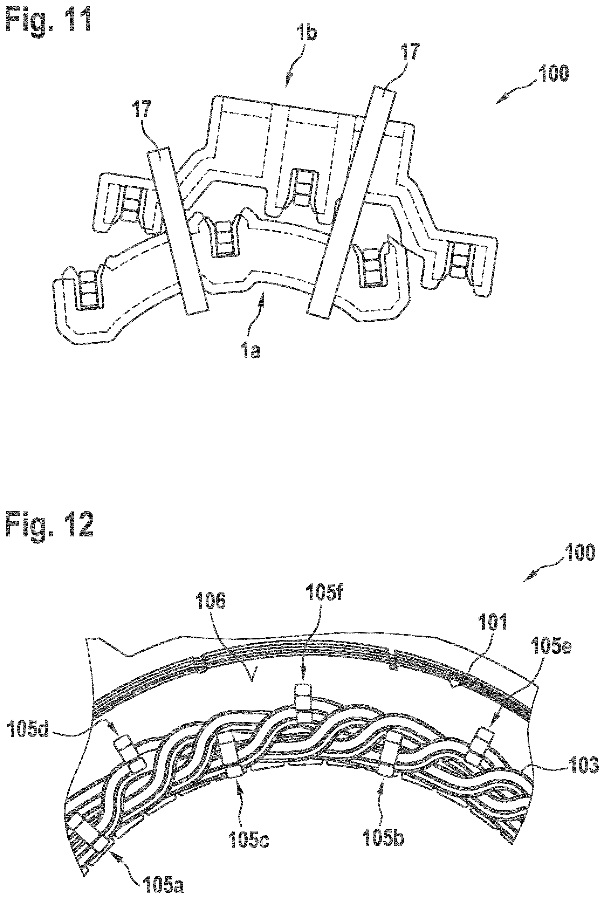

Fig. 11 ist eine Draufsicht auf ein weiteres Ausführungsbeispiel der Statoranordnung 100 , das nicht zur Erfindung gehört, mit einem sechsten Ausführungsbeispiel einer Anschlusseinheit 1a und einem siebten Ausführungsbeispiel einer Anschlusseinheit 1b.

Bei den vorliegenden Ausführungsbeispielen weisen die Anschlusseinheiten 1a, 1b keine Befestigungsabschnitte auf. Die Statoranordnung 100 umfasst ein schematisch dargestelltes Befestigungsmittel 17, durch welches die erste Anschlusseinheit 1a und die zweite Anschlusseinheit 1b aus der losen Stellung in die befestigte Stellung überführbar sind. Das Befestigungsmittel 17 ist dazu eingerichtet, die Anschlusseinheit 1a und die Anschlusseinheit 1b in der befestigten Stellung durch eine auf die Anschlusseinheiten 1a, 1b wirkende Kraft zusammen zu zwingen, sodass die Anschlussabschnitte 105a-f in der befestigten Stellung elektrisch leitfähig an den Kontaktabschnitten 2a-f befestigt werden können. Dies kann beispielsweise durch stoffschlüssiges Verfügen, insbesondere durch Schweißen, geschehen. Das Befestigungsmittel 17 ist als zusätzliche, von den Anschlusseinheiten 1a, 1b separate Komponente ausgebildet. Das Befestigungsmittel ist in der befestigten Stellung, insbesondere nach Herstellung der Befestigung der Anschlussabschnitte 105a-f an den Kontaktabschnitten 2a-f, lösbar, sodass das Befestigungsmittel 17 nicht an der Statoranordnung 100 verbleibt.

Fig. 12 eine stirnseitige Detailansicht eines Stators 101 eines weiteren Ausführungsbeispiels einer Statoranordnung 100. Bei dem Stator 101 sind die Anschlussabschnitte 105a-f an ihrer jeweiligen Winkelposition in Umfangsrichtung radial ausgerichtet.

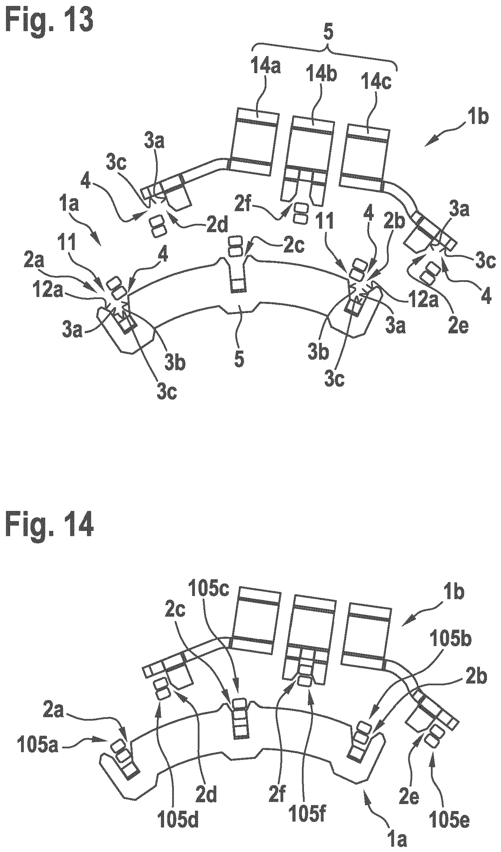

Fig. 13 bis Fig. 15 sind jeweils eine Draufsicht auf zwei Anschlusseinheiten 1a, 1b gemäß einem achten und einem neunten Ausführungsbeispiel für die in Fig. 12 gezeigte Statoranordnung beim Übergang von einer losen Stellung in eine befestigte Stellung. Aus Gründen der Übersichtlichkeit wurde auf die Darstellung des Isolationskörpers 6 und der Befestigungsabschnitte 8, 10 in den Fig. 13 bis 15 verzichtet. Es lassen sich jedoch alle Ausführungen zum Isolationskörper 6 und zu den Befestigungsabschnitten 8, 10 aus den vorangegangenen Ausführungsbeispielen auf das achte und neunte Ausführungsbeispiel übertragen.

Fig. 13 zeigt die Anschlusseinheiten 1a, 1b in der losen Stellung.

Bei der ersten Anschlusseinheit 1a ist die jeweilige zweite Wand 3b des ersten Kontaktabschnitts 2a und des zweiten Kontaktabschnitts 2b vom Aufnahmeraum 4 wegweisend abgeschrägt. Die Führung 11 des ersten Kontaktabschnitts 2a und des zweiten Kontaktabschnitts 2b ist durch die erste Wand 12a, die sich an die erste Wand 3a des ersten Kontaktabschnitts 2a bzw. des zweiten Kontaktabschnitts 2b anschließt, ausgebildet. Das heißt, dass bei der Führung 11 des ersten Kontaktabschnitts 2a und des zweiten Kontaktabschnitts 2b keine zweite Wand 12b vorgesehen ist. Der dritte Kontaktabschnitt 2c entspricht jenem des ersten Ausführungsbeispiels.

Bei der zweiten Anschlusseinheit 1b ist der jeweilige Aufnahmeraum 4 des ersten Kontaktabschnitts 2d und des zweiten Kontaktabschnitts 2e auf einer der ersten Wand 3a gegenüberliegenden Seite offen. Das heißt, dass beim ersten Kontaktabschnitt 2d und beim zweiten Kontaktabschnitt 2e keine zweite Wand vorgesehen ist. Die Führung 11 des ersten Kontaktabschnitts 2d und des zweiten Kontaktabschnitts 2e ist durch ihre erste Wand 12a, die sich an die erste Wand 3a des ersten Kontaktabschnitts 2d bzw. des zweiten Kontaktabschnitts 2e anschließt, ausgebildet. Das heißt, dass bei der Führung 11 des zweiten Kontaktabschnitts 2d und des zweiten Kontaktabschnitts 2e keine zweite Wand 12b vorgesehen ist. Der dritte Kontaktabschnitt 2c entspricht jenem des zweiten Ausführungsbeispiels.

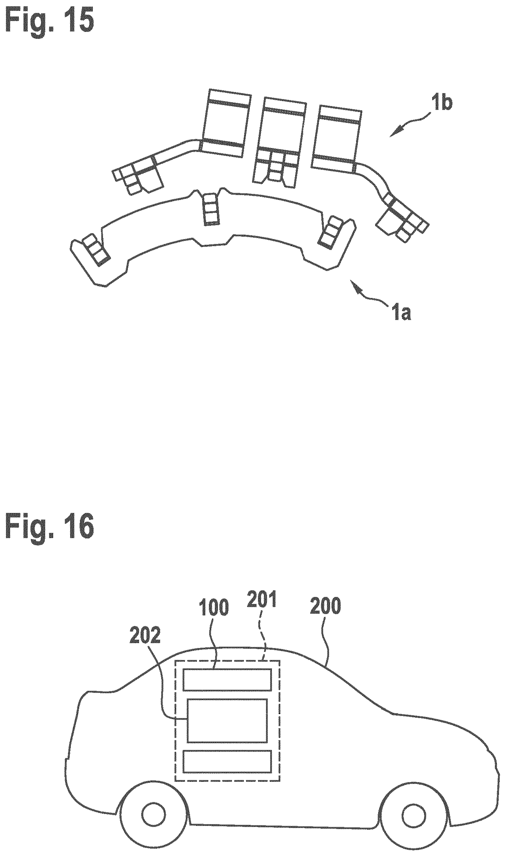

Wie in Fig. 14 bis Fig. 15 dargestellt werden die Anschlusseinheiten 1a, 1b analog zu Fig. 6 bis Fig. 8 aus der losen Stellung in die in Fig. 15 dargestellte befestigte Stellung überführt. Die abgeschrägten zweiten Wände 3b der ersten und zweiten Kontaktabschnitte 2a, 2b der ersten Anschlusseinheit 1a ermöglichen hier einen Ausgleich der Positionstoleranzen auch dadurch, dass die Anschlussabschnitte 105a, 105b an den zweiten Wänden 2a, 2b entlang gleiten können. Die offene Ausgestaltung der ersten und zweiten Kontaktabschnitte 2d, 2e der zweiten Anschlusseinheit 1b ermöglich, dass die Anschlussabschnitte 105a, 105b bei der Linearbewegung nicht verkanten. So wird die Anordnung der Anschlusseinheiten 1a, 1b an den Anschlussabschnitten 105a-f auch bei deren radialer Ausrichtung durch die Linearbewegung ermöglicht.

Im Folgenden werden Ausführungsbeispiele eines Verfahrens zur Herstellung einer Statoranordnung 100 beschrieben, die anhand der Fig. 1 bis Fig. 15 näher erläutert werden.

Gemäß einem ersten Ausführungsbeispiel des Verfahrens sind ein Schritt des Bereitstellens einer ersten Anschlusseinheit 1a und ein Schritt des Bereitstellens einer zweiten Anschlusseinheit 1b vorgesehen. Es ist ferner ein weiterer Schritt des Bereitstellens eines Stators 101 vorgesehen. Das Verfahren umfasst ferner einen Schritt des Anordnens des ersten bis dritten Anschlussabschnitts 105a, 105b, 105c des Stators 101 im Aufnahmeraum 4 eines jeweiligen Kontaktabschnitts 2a, 2b, 2c der Anschlusseinheit 1a sowie einen Schritt des Anordnens des vierten bis sechsten Anschlussabschnitts 105d, 105e, 105f des Stators 101 im Aufnahmeraum 4 eines jeweiligen Kontaktabschnitts 2d, 2e, 2f der zweiten Anschlusseinheit 1b. Die Schritte des Anordnens erfolgen durch Durchführen einer Relativbewegung der ersten Anschlusseinheit 1a und der zweiten Anschlusseinheit 1b entlang einer im Wesentlichen senkrecht zur Erstreckungsrichtung der Anschlussabschnitte 105a-f verlaufenden Bewegungsrichtung, wenn die Anschlusseinheiten 1a, 1b dem ersten bis dritten Ausführungsbeispiel entsprechen. Wenn die Anschlusseinheiten 1a, 1b dem vierten bis fünften Ausführungsbeispiel entsprechen, ist die Bewegungsrichtung hingegen parallel zur Erstreckungsrichtung der Anschlussabschnitte 105a-f. Beim sechsten und siebten Ausführungsbeispiel ist die Bewegungsrichtung beliebig.

Das Verfahren umfasst ferner einen Schritt des Überführens der ersten Anschlusseinheit 1a und der zweiten Anschlusseinheit 1b aus einer losen Stellung in eine befestigte Stellung mittels des Befestigungsmittels 17 bzw. der Befestigungsabschnitte 8, 10, wobei die erste Anschlusseinheit 1a und die zweite Anschlusseinheit 1b in der befestigten Stellung aneinander befestigt sind und die Leiteranordnung 5 der ersten Anschlusseinheit 1a und die Leiteranordnung 5 der zweiten Anschlusseinheit 1b gegeneinander elektrisch isoliert sind.

Das Verfahren umfasst ferner einen Schritt des Verfügens der Anschlussabschnitte 105a-f und der Kontaktabschnitte 2a-f unter Ausbildung stoffschlüssiger Fügeverbindungen in der befestigten Stellung der Befestigungsabschnitte 8, 10 bzw. des Befestigungsmittels 17.

Wenn das Befestigungsmittel 17 gemäß Fig. 11 verwendet wird, kann das Verfahren im Anschluss an das Verfügen ferner folgenden Schritt umfassen: Entfernen des Befestigungsmittels 17 durch Überführen aus der befestigten Stellung in die lose Stellung.

Fig. 16 ist eine Prinzipskizze eines Fahrzeugs 200 mit einem Ausführungsbeispiel einer elektrischen Maschine 201, die zum Antreiben des Fahrzeugs 200 eingerichtet ist.

Die elektrische Maschine 201 umfasst eine Statoranordnung 100 gemäß einem der zuvor beschriebenen Ausführungsbeispiele bzw. eine durch das Verfahren erhaltene Statoranordnung 100 und einen drehbar innerhalb der Statoranordnung 100 gelagerten Rotor 202. Die elektrische Maschine 201 ist als Teil eines Antriebstrangs des Fahrzeugs 200 ausgebildet. Die elektrische Maschine 201 kann eine Synchronmaschine sein. Der Rotor 202 ist bevorzugt permanenterregt. Alternativ ist die elektrische Maschine 201 eine Asynchronmaschine.

Das Fahrzeug 200 kann dementsprechend ein batterieelektrisches Fahrzeug (BEV) oder ein Hybridfahrzeug sein.

## Patentansprüche

1. Anschlusseinheit (1a, 1b) für einen Stator (101) mit einer eine Anzahl N Stränge aufweisenden Statorwicklung (103), aufweisend
- erste bis N-te Kontaktabschnitte (2a-c; 2d-f), die jeweils zum elektrisch leitfähigen Kontaktieren eines von N Anschlussabschnitten (105a-c; 105d-f) des Stators (101) eingerichtet sind, einen Aufnahmeraum (4) zum Aufnehmen eines der Anschlussabschnitte (105a-c; 105d-f) ausbilden und eine Führung (11) aufweisen, wobei ein jeweiliger Kontaktabschnitt (2a-c; 2d-f) eine Wand (3a) aufweist, die den Aufnahmeraum (4) einseitig begrenzt und die Führung (11) des Kontaktabschnitts (2a-c; 2d-f) eine Wand (12a) aufweist, die sich an die Wand (3a) des Kontaktabschnitts (2a-c; 2d-f) anschließt und bezüglich der Wand (3a) des Kontaktabschnitts (2a-c; 2d-f) vom Aufnahmeraum (4) wegweisend abgeschrägt ist, und
- eine Leiteranordnung (5), die entweder die ersten bis N-ten Kontaktabschnitte (2a-c) elektrisch leitfähig verbindet oder N Leiterabschnitte (14a-c) umfasst, die gegeneinander elektrisch isoliert und jeweils mit einem der Kontaktabschnitte (2d-f) elektrisch leitfähig verbunden sind und
- einen Isolationskörper (6), der an der Leiteranordnung (5) angeordnet ist und die Kontaktabschnitte (2a-c; 2d-f) freilegende Öffnungen (7a-c) aufweist und
- einen Befestigungsabschnitt (8, 10), der dazu eingerichtet ist, mit einem Befestigungsabschnitt (8, 10) einer weiteren Anschlusseinheit (1b; 1a) derart ineinanderzugreifen, dass die Anschlusseinheit (1a; 1b) und die weitere Anschlusseinheit (1b; 1a) aus einer losen Stellung in eine befestigte Stellung überführbar sind, in welcher die Anschlusseinheit (1a; 1b) und die weitere Anschlusseinheit (1b; 1a) aneinander befestigt sind und die Leiteranordnung (5) der Anschlusseinheit (1a; 1b) und eine Leiteranordnung (5) der weiteren Anschlusseinheit (1b; 1a) gegeneinander elektrisch isoliert sind.

2. Anschlusseinheit nach Anspruch 1, wobei
der N-te Kontaktabschnitt (2c; 2f) eine zweite Wand (3b) aufweist, die den Aufnahmeraum (4) auf einer der ersten Wand (3a) gegenüberliegenden Seite einseitig begrenzt, sodass der N-te Kontaktabschnitt (2c) zum Einfassen des Anschlussabschnitts (105c; 105f) eingerichtet ist, wobei die Führung (11) des N-ten Kontaktabschnitts (2c; 2f) eine zweite Wand (12b) aufweist, die sich an die zweite Wand (3b) des Kontaktabschnitts (2c; 2f) anschließt und bezüglich der zweiten Wand (3b) des N-ten Kontaktabschnitts (2c; 2f) vom Aufnahmeraum (4) wegweisend abgeschrägt ist, sodass die Führung im Vergleich zu einem Abstand (d) der ersten Wand (3a) des Kontaktabschnitts (2c; 2f) zur zweiten Wand (3b) des N-ten Kontaktabschnitts (2c; 2f) aufgeweitet ist.

3. Anschlusseinheit nach Anspruch 1 oder 2, wobei
der N-te Kontaktabschnitt (2c; 2f) eine dritte Wand (3c) aufweist, welche den Aufnahmeraum (4) in einer zur ersten Wand (3a) senkrechten Richtung begrenzt.

4. Anschlusseinheit nach einem der vorhergehenden Ansprüche, wobei
der Aufnahmeraum (4) eines jeweiligen des ersten bis (N-1)-ten Kontaktabschnitts (2d; 2e) auf einer der ersten Wand (3a) gegenüberliegenden Seite offen ist.

5. Anschlusseinheit nach einem der Ansprüche 1 bis 3, wobei
die ersten bis (N-1)-ten Kontaktabschnitte (2a; 2b) jeweils eine der ersten Wand (3a) gegenüberliegende zweite Wand (2b) aufweisen, die vom Aufnahmeraum (4) wegweisend abgeschrägt ist.

6. Anschlusseinheit nach Anspruch 2 oder 3, wobei
ein jeweiliger der ersten bis (N-1)-ten Kontaktabschnitte (2c; 2f) eine zweite Wand (3b) aufweist, die den Aufnahmeraum (4) auf einer der ersten Wand (3a) gegenüberliegenden Seite einseitig begrenzt, sodass der jeweilige Kontaktabschnitt (2c; 2f) zum Einfassen des Anschlussabschnitts (105c; 105f) eingerichtet ist, wobei die ersten und zweiten Wände (3a, 3b) der N Kontaktabschnitte (2a-c; 2d-f) parallel zueinander ausgerichtet sind.

7. Anschlusseinheit nach Anspruch 6, wobei
die Führung (11) eines jeweiligen der ersten bis (N-1)-ten Kontaktabschnitte (2a, 2b; 2d, 2e) eine zweite Wand (12b) aufweist, die sich an die zweite Wand (3b) des Kontaktabschnitts (2a, 2b; 2d, 2e) anschließt und bezüglich der zweiten Wand (3b) des jeweiligen Kontaktabschnitts (2a, 2b; 2d, 2e) vom Aufnahmeraum wegweisend abgeschrägt ist, sodass die Führung (11) im Vergleich zu einem Abstand (d) der ersten Wand (3a) des Kontaktabschnitts (2a, 2b; 2d, 2e) zur zweiten Wand (3b) des jeweiligen Kontaktabschnitts (2a, 2b; 2d, 2e) aufgeweitet ist.

8. Anschlusseinheit nach einem der vorhergehenden Ansprüche, wobei
die ersten bis (N-1)-ten Kontaktabschnitt jeweils eine weitere Wand aufweisen, welche den Aufnahmeraum in einer zur ersten Wand senkrechten Richtung begrenzt.

9. Statoranordnung (100) für eine elektrische Maschine (201), aufweisend:
- einen Stator (101), aufweisend einen Statorkern (102) mit einer axialen Stirnseite (106) und eine Statorwicklung (103), die eine Anzahl N Stränge aufweist und abschnittsweise aus Formleitern (104a, 104b), die sich durch den Statorkern (102) erstrecken, und aus ersten bis N-ten Anschlussabschnitten (105a-c; 105d-f), die sich an der Stirnseite (106) an einen Teil der Formleiter (104a, 104b) anschließend an unterschiedlichen Winkelpositionen einer Umfangsrichtung in Axialrichtung erstrecken und entweder zur Ausbildung eines Sternpunkts oder zur Ausbildung von Anschlüssen für die Stränge eingerichtet sind, ausgebildet ist; und
- eine Anschlusseinheit (1a; 1b) nach einem der vorhergehenden Ansprüche; wobei die ersten bis N-ten Anschlussabschnitte (105a-c; 105d-f) jeweils im Aufnahmeraum (4) eines Kontaktabschnitts (2a-c; 2d-f) der Anschlusseinheit (1a, 1b) aufgenommen sind.

10. Statoranordnung nach Anspruch 9, wobei
die Leiteranordnung (5) der ersten Anschlusseinheit (1a) die Kontaktabschnitte (2a-c) elektrisch leitfähig zur Ausbildung eines Sternpunkts verbindet, wobei die Statoranordnung (100) ferner aufweist: eine zweite Anschlusseinheit (1b) nach einem der Ansprüche 1 bis 8, deren Leiteranordnung (5) N Leiterabschnitte (14a-c) umfasst, die gegeneinander elektrisch isoliert und jeweils zur Ausbildung eines Anschlusses für einen der Stränge mit einem der N Kontaktabschnitte (2d-f) elektrisch leitfähig verbunden sind, wobei die (N+1)-ten bis (2N)-ten Anschlussabschnitte (105d-f) jeweils im Aufnahmeraum (4) eines Kontaktabschnitts (2c-f) der zweiten Anschlusseinheit (1b) aufgenommen sind, wobei insbesondere ein Befestigungsmittel (17) vorgesehen ist, durch welches die erste Anschlusseinheit (1a) und die zweite Anschlusseinheit (1b) aus einer losen Stellung in eine befestigte Stellung überführbar sind, in welcher die erste Anschlusseinheit (1a) und die zweite Anschlusseinheit (1b) aneinander befestigt sind und die Leiteranordnung (5) der ersten Anschlusseinheit (1a) und die Leiteranordnung (5) der zweiten Anschlusseinheit (1b) gegeneinander elektrisch isoliert sind.

11. Verfahren zur Herstellung einer Statoranordnung, umfassend folgende Schritte:
- Bereitstellen einer Anschlusseinheit (1a; 1b) nach einem der Ansprüche 1 bis 8;
- Bereitstellen eines Stators (101) für eine elektrische Maschine (201), aufweisend einen Statorkern (102) mit einer axialen Stirnseite (106) und eine Statorwicklung (103), die eine Anzahl N Stränge aufweist und abschnittsweise aus Formleitern (104a, 104b), die sich durch den Statorkern (102) erstrecken, und aus ersten bis N-ten Anschlussabschnitten (105a-c; 105d-f), die sich an der Stirnseite (106) an einen Teil der Formleiter (104a, 104b) anschließend an unterschiedlichen Winkelpositionen einer Umfangsrichtung in Axialrichtung erstrecken und entweder zur Ausbildung eines Sternpunkts oder zur Ausbildung von Anschlüssen für die Stränge eingerichtet sind, ausgebildet ist; und
- Anordnen der ersten bis N-ten Anschlussabschnitte (105a-c; 105d-f) des Stators (101) in den Aufnahmeräumen der Kontaktabschnitte (2a-c; 2d-f) der Anschlusseinheit (1a; 1b), insbesondere durch Durchführen einer Relativbewegung der Anschlusseinheit (1a; 1b) entlang einer im Wesentlichen senkrecht oder parallel zu einer Erstreckungsrichtung der Anschlussabschnitte (105a-c; 105d-f) verlaufenden Bewegungsrichtung;
und insbesondere Verfügen der Anschlussabschnitte (105a-f) und der Kontaktabschnitte (2a-f).

12. Verfahren nach Anspruch 11, wobei
die ersten bis N-ten Anschlussabschnitte (105a-c) zur Ausbildung eines Sternpunkts eingerichtet sind, wobei die Statorwicklung ferner abschnittsweise aus (N+1)-ten bis (2N)-ten Anschlussabschnitten (105d-f), die sich an der Stirnseite an einen Teil der Formleiter (104a, 104b) anschließend an unterschiedlichen Winkelpositionen einer Umfangsrichtung in Axialrichtung erstrecken und zur Ausbildung von Anschlüssen für die Stränge eingerichtet sind, gebildet ist,
ferner umfassend folgende Schritte:
- Bereitstellen einer zweiten Anschlusseinheit (1b) nach einem der Ansprüche 1 bis 8, deren Leiteranordnung (5) N Leiterabschnitte (14a-c) umfasst, die gegeneinander elektrisch isoliert und jeweils zur Ausbildung eines Anschlusses für einen der Stränge mit einem der N Kontaktabschnitte (2c-f) elektrisch leitfähig verbunden sind; und
- Anordnen der (N+1)-ten bis (2N)-ten Anschlussabschnitte (105d-f) des Stators (101) in den Aufnahmeräumen (4) der Kontaktabschnitte (2c-f) der zweiten Anschlusseinheit (1b), insbesondere durch Durchführen einer Relativbewegung der zweiten Anschlusseinheit (1b) entlang einer im Wesentlichen senkrecht oder parallel zu einer Erstreckungsrichtung der Anschlussabschnitte (105d-f) verlaufenden Bewegungsrichtung.

13. Verfahren nach Anspruch 12, ferner umfassend folgenden Schritt:
Überführen der ersten Anschlusseinheit (1a) und der zweiten Anschlusseinheit (1b) aus einer losen Stellung in eine befestigte Stellung mittels eines Befestigungsmittels (17) oder mittels durch die Anschlusseinheiten (1a, 1b) ausgebildeter Befestigungsabschnitte (8, 10), wobei die erste Anschlusseinheit (1a) und die zweite Anschlusseinheit (1b) in der befestigten Stellung aneinander befestigt sind und die Leiteranordnung (5) der ersten Anschlusseinheit (1a) und die Leiteranordnung (5) der zweiten Anschlusseinheit (1b) gegeneinander elektrisch isoliert sind;
wobei insbesondere ein Schritt des Entfernens des Befestigungsmittels (17) durch Überführen aus der befestigten Stellung in die lose Stellung nach dem Verfügen der Anschlussabschnitte (105a-f) und der Kontaktabschnitte (2a-f) vorgesehen ist.

14. Elektrische Maschine (201) zum Antreiben eines Fahrzeugs (200), aufweisend: eine Statoranordnung (101) nach Anspruch 9 oder 10 oder eine durch ein Verfahren nach einem der Ansprüche 11 bis 13 erhaltene Statoranordnung (101); und einen innerhalb des Stators (101) drehbar gelagerten Rotor (202).

## Claims

1. A connection unit (1a, 1b) for a stator (101) having a stator winding (103) with a number N of phases, comprising:
• first to N-th contact sections (2a-c; 2d-f), each configured to electrically conductively contact one of N connection sections (105a-c; 105d-f) of the stator (101), forming a receiving space (4) for receiving one of the connection sections (105a-c; 105d-f) and having a guide (11), wherein a respective contact section (2a-c; 2d-f) has a wall (3a) which delimits the receiving space (4) on one side, and the guide (11) of the contact section (2a-c; 2d-f) has a wall (12a) which adjoins the wall (3a) of the contact section (2a-c; 2d-f) and is chamfered away from the receiving space (4) with respect to the wall (3a) of the contact section (2a-c; 2d-f), and
• a conductor arrangement (5) which either electrically conductively connects the first to N-th contact sections (2a-c) or comprises N conductor sections (14a-c) which are electrically insulated from each other and are each electrically conductively connected to one of the contact sections (2d-f), and
• an insulating body (6) which is arranged on the conductor arrangement (5) and has openings (7a-c) exposing the contact sections (2a-c; 2d-f), and/or
• a fastening section (8, 10) which is configured to interlock with a fastening section (8, 10) of a further connection unit (1b; 1a) such that the connection unit (1a; 1b) and the further connection unit (1b; 1a) can be transferred from a loose position into a fastened position, in which the connection unit (1a; 1b) and the further connection unit (1b; 1a) are fastened to each other and the conductor arrangement (5) of the connection unit (1a; 1b) and a conductor arrangement (5) of the further connection unit (1b; 1a) are electrically insulated from each other.

2. The connection unit according to claim 1, wherein the N-th contact section (2c; 2f) has a second wall (3b) which delimits the receiving space (4) on one side on a side opposite to the first wall (3a), so that the N-th contact section (2c) is configured to surround the connection section (105c; 105f), wherein the guide (11) of the N-th contact section (2c; 2f) has a second wall (12b) which adjoins the second wall (3b) of the contact section (2c; 2f) and is chamfered away from the receiving space (4) with respect to the second wall (3b) of the N-th contact section (2c; 2f), so that the guide is widened compared to a distance (d) from the first wall (3a) of the contact section (2c; 2f) to the second wall (3b) of the N-th contact section (2c; 2f).

3. The connection unit according to claim 1 or 2, wherein the N-th contact section (2c; 2f) has a third wall (3c) which delimits the receiving space (4) in a direction perpendicular to the first wall (3a).

4. The connection unit according to any one of the preceding claims, wherein the receiving space (4) of a respective one of the first to (N-1)-th contact sections (2d; 2e) is open on a side opposite to the first wall (3a).

5. The connection unit according to any one of claims 1 to 3, wherein the first to (N-1)-th contact sections (2a; 2b) each have a second wall (2b) opposite to the first wall (3a), which is chamfered away from the receiving space (4).

6. The connection unit according to claim 2 or 3, wherein a respective one of the first to (N-1)-th contact sections (2c; 2f) has a second wall (3b) which delimits the receiving space (4) on one side on a side opposite to the first wall (3a), so that the respective contact section (2c; 2f) is configured to surround the connection section (105c; 105f), wherein the first and second walls (3a, 3b) of the N contact sections (2a-c; 2d-f) are aligned parallel to each other.

7. The connection unit according to claim 6, wherein the guide (11) of a respective one of the first to (N-1)-th contact sections (2a, 2b; 2d, 2e) has a second wall (12b) which adjoins the second wall (3b) of the contact section (2a, 2b; 2d, 2e) and is chamfered away from the receiving space with respect to the second wall (3b) of the respective contact section (2a, 2b; 2d, 2e), so that the guide (11) is widened compared to a distance (d) from the first wall (3a) of the contact section (2a, 2b; 2d, 2e) to the second wall (3b) of the respective contact section (2a, 2b; 2d, 2e).

8. The connection unit according to any one of the preceding claims, wherein the first to (N-1)-th contact sections each have a further wall which delimits the receiving space in a direction perpendicular to the first wall.

9. A stator arrangement (100) for an electric machine (201), comprising:
• a stator (101), having a stator core (102) with an axial end face (106) and a stator winding (103) which has a number N of phases and is formed in sections from shaped conductors (104a, 104b) extending through the stator core (102), and from first to N-th connection sections (105a-c; 105d-f) which extend on the end face (106) adjoining a part of the shaped conductors (104a, 104b) at different angular positions of a circumferential direction in the axial direction and are configured either to form a neutral point or to form connections for the phases; and
• a connection unit (1a; 1b) according to any one of the preceding claims; wherein the first to N-th connection sections (105a-c; 105d-f) are each received in the receiving space (4) of a contact section (2a-c; 2d-f) of the connection unit (1a, 1 b).

10. The stator arrangement according to claim 9, wherein the conductor arrangement (5) of the first connection unit (1a) electrically conductively connects the contact sections (2a-c) to form a neutral point, the stator arrangement (100) further comprising: a second connection unit (1b) according to any one of claims 1 to 8, the conductor arrangement (5) of which comprises N conductor sections (14a-c) which are electrically insulated from each other and are each electrically conductively connected to one of the N contact sections (2d-f) to form a connection for one of the phases, wherein the (N+1)-th to (2N)-th connection sections (105d-f) are each received in the receiving space (4) of a contact section (2c-f) of the second connection unit (1b), wherein in particular a fastening means (17) is provided, by means of which the first connection unit (1a) and the second connection unit (1b) can be transferred from a loose position into a fastened position, in which the first connection unit (1a) and the second connection unit (1b) are fastened to each other and the conductor arrangement (5) of the first connection unit (1a) and the conductor arrangement (5) of the second connection unit (1b) are electrically insulated from each other.

11. A method for manufacturing a stator arrangement, comprising the following steps:
• providing a connection unit (1a; 1b) according to any one of claims 1 to 8;
• providing a stator (101) for an electric machine (201), having a stator core (102) with an axial end face (106) and a stator winding (103) which has a number N of phases and is formed in sections from shaped conductors (104a, 104b) extending through the stator core (102), and from first to N-th connection sections (105a-c; 105d-f) which extend on the end face (106) adjoining a part of the shaped conductors (104a, 104b) at different angular positions of a circumferential direction in the axial direction and are configured either to form a neutral point or to form connections for the phases; and
• arranging the first to N-th connection sections (105a-c; 105d-f) of the stator (101) in the receiving spaces of the contact sections (2a-c; 2d-f) of the connection unit (1a; 1b), in particular by performing a relative movement of the connection unit (1a; 1b) along a movement direction running substantially perpendicular or parallel to an extension direction of the connection connection sections (105a-c; 105d-f);
• and in particular joining the connection sections (105a-f) and the contact sections (2a-f).

12. The method according to claim 11, wherein the first to N-th connection sections (105a-c) are configured to form a neutral point, wherein the stator winding is further formed in sections from (N+1)-th to (2N)-th connection sections (105d-f) which extend on the end face adjoining a part of the shaped conductors (104a, 104b) at different angular positions of a circumferential direction in the axial direction and are configured to form connections for the phases, further comprising the following steps:
• providing a second connection unit (1b) according to any one of claims 1 to 8, the conductor arrangement (5) of which comprises N conductor sections (14a-c) which are electrically insulated from each other and are each electrically conductively connected to one of the N contact sections (2c-f) to form a connection for one of the phases; and
• arranging the (N+1)-th to (2N)-th connection sections (105d-f) of the stator (101) in the receiving spaces (4) of the contact sections (2c-f) of the second connection unit (1b), in particular by performing a relative movement of the second connection unit (1b) along a movement direction running substantially perpendicular or parallel to an extension direction of the connection sections (105d-f).

13. The method according to claim 12, further comprising the following step:
• transferring the first connection unit (1a) and the second connection unit (1b) from a loose position into a fastened position by means of a fastening means (17) or by means of fastening sections (8, 10) formed by the connection units (1a, 1b), wherein the first connection unit (1a) and the second connection unit (1b) are fastened to each other in the fastened position and the conductor arrangement (5) of the first connection unit (1a) and the conductor arrangement (5) of the second connection unit (1b) are electrically insulated from each other; wherein in particular a step of removing the fastening means (17) by transferring it from the fastened position into the loose position after joining the connection sections (105a-f) and the contact sections (2a-f) is provided.

14. An electric machine (201) for driving a vehicle (200), comprising: a stator arrangement (101) according to claim 9 or 10 or a stator arrangement (101) obtained by a method according to any one of claims 11 to 13; and a rotor (202) rotatably mounted within the stator (101).

## Revendications

1. Unité de connexion (1a, 1b) pour un stator (101) équipé d'un enroulement de stator (103) présentant un nombre N de phases, comprenant :
• des première à N-ième sections de contact (2a-c ; 2d-f), qui sont configurées chacune pour venir en contact électriquement conducteur avec l'une de N sections de raccordement (105a-c ; 105d-f) du stator (101), forment un espace de logement (4) destiné à loger l'une des sections frde raccordement (105a-c ; 105d-f) et présentent un guidage (11), dans laquelle une section de contact (2a-c ; 2d-f) respective présente une paroi (3a) qui délimite l'espace de logement (4) d'un côté, et le guidage (11) de la section de contact (2a-c ; 2d-f) présente une paroi (12a) qui se raccorde à la paroi (3a) de la section de contact (2a-c ; 2d-f) et est biseautée en s'éloignant de l'espace de logement (4) par rapport à la paroi (3a) de la section de contact (2a-c ; 2d-f), et
• un agencement de conducteurs (5) qui, soit relie de manière électriquement conductrice les première à N-ième sections de contact (2a-c), soit comprend N sections de conducteur (14a-c) qui sont isolées électriquement les unes des autres et sont reliées chacune de manière électriquement conductrice à l'une des sections de contact (2d-f), et
• un corps isolant (6), qui est disposé sur l'agencement de conducteurs (5) et présente des ouvertures (7a-c) laissant dégagées les sections de contact (2a-c ; 2d-f), et/ou
• une section de fixation (8, 10), qui est configurée pour s'engager avec une section de fixation (8, 10) d'une autre unité de connexion (1 b ; 1a) de telle sorte que l'unité de connexion (1a ; 1b) et l'autre unité de connexion (1b ; 1a) peuvent être amenées d'une position desserrée à une position fixée, dans laquelle l'unité de connexion (1a ; 1b) et l'autre unité de connexion (1b ; 1a) sont fixées l'une à l'autre et l'agencement de conducteurs (5) de l'unité de connexion (1a ; 1b) et un agencement de conducteurs (5) de l'autre unité de connexion (1b ; 1a) sont isolés électriquement l'un de l'autre.

2. Unité de connexion selon la revendication 1, dans laquelle la N-ième section de contact (2c ; 2f) présente une deuxième paroi (3b) qui délimite l'espace de logement (4) d'un côté sur un côté opposé à la première paroi (3a), de sorte que la N-ième section de contact (2c) est configurée pour entourer la section de raccordement (105c ; 105f), dans laquelle le guidage (11) de la N-ième section de contact (2c ; 2f) présente une deuxième paroi (12b) qui se raccorde à la deuxième paroi (3b) de la section de contact (2c ; 2f) et est biseautée en s'éloignant de l'espace de logement (4) par rapport à la deuxième paroi (3b) de la N-ième section de contact (2c ; 2f), de sorte que le guidage est élargi par rapport à une distance (d) entre la première paroi (3a) de la section de contact (2c ; 2f) et la deuxième paroi (3b) de la N-ième section de contact (2c ; 2f).

3. Unité de connexion selon la revendication 1 ou 2, dans laquelle la N-ième section de contact (2c ; 2f) presents une troisième paroi (3c) qui délimite l'espace de logement (4) dans une direction perpendiculaire à la première paroi (3a).

4. Unité de connexion selon l'une des revendications précédentes, dans laquelle l'espace de logement (4) de chacune des première à (N-1)-ième sections de contact (2d ; 2e) est ouvert sur un côté opposé à la première paroi (3a).

5. Unité de connexion selon l'une des revendications 1 à 3, dans laquelle les première à (N-1)-ième sections de contact (2a ; 2b) présentent chacune une deuxième paroi (2b) opposée à la première paroi (3a), qui est biseautée en s'éloignant de l'espace de logement (4).

6. Unité de connexion selon la revendication 2 ou 3, dans laquelle chacune des première à (N-1)-ième sections de contact (2c ; 2f) présente une deuxième paroi (3b) qui délimite l'espace de logement (4) d'un côté sur un côté opposé à la première paroi (3a), de sorte que la section de contact respective (2c ; 2f) est configurée pour entourer la section de raccordement (105c ; 105f), dans laquelle les premières et deuxièmes parois (3a, 3b) des N sections de contact (2a-c ; 2d-f) sont orientées parallèlement les unes aux autres.

7. Unité de connexion selon la revendication 6, dans laquelle le guidage (11) de chacune des première à (N-1)-ième sections de contact (2a, 2b ; 2d, 2e) présente une deuxième paroi (12b) qui se raccorde à la deuxième paroi (3b) de la section de contact (2a, 2b ; 2d, 2e) et est biseautée en s'éloignant de l'espace de logement par rapport à la deuxième paroi (3b) de la section de contact (2a, 2b ; 2d, 2e) respective, de sorte que le guidage (11) est élargi par rapport à une distance (d) entre la première paroi (3a) de la section de contact (2a, 2b ; 2d, 2e) et la deuxième paroi (3b) de la section de contact (2a, 2b ; 2d, 2e) respective.

8. Unité de connexion selon l'une des revendications précédentes, dans laquelle les première à (N-1)-ième sections de contact présentent chacune une autre paroi qui délimite l'espace de logement dans une direction perpendiculaire à la première paroi.

9. Agencement de stator (100) pour une machine électrique (201), comprenant :
• un stator (101), présentant un noyau de stator (102) avec une face frontale axiale (106) et un enroulement de stator (103) qui présente un nombre N de phases et est formé par sections de conducteurs préformés (104a, 104b) s'étendant à travers le noyau de stator (102), et de première à N-ième sections de raccordement (105a-c ; 105d-f) qui s'étendent sur la face frontale (106) de manière adjacente à une partie des conducteurs préformés (104a, 104b) à différentes positions angulaires d'une direction circonférentielle dans la direction axiale et sont configurées soit pour former un point neutre, soit pour former des raccordements pour les phases ; et
• une unité de connexion (1a ; 1b) selon l'une des revendications précédentes ;
dans lequel les première à N-ième sections de raccordement (105a-c ; 105d-f) sont logées chacune dans l'espace de logement (4) d'une section de contact (2a-c ; 2d-f) de l'unité de connexion (1a, 1b).

10. Agencement de stator selon la revendication 9, dans lequel l'agencement de conducteurs (5) de la première unité de connexion (1a) relie de manière électriquement conductrice les sections de contact (2a-c) pour former un point neutre, l'agencement de stator (100) comprenant en outre : une deuxième unité de connexion (1b) selon l'une des revendications 1 à 8, dont l'agencement de conducteurs (5) comprend N sections de conducteur (14a-c) qui sont isolées électriquement les unes des autres et sont reliées chacune de manière électriquement conductrice à l'une des N sections de contact (2d-f) pour former un raccordement pour l'une des phases, dans lequel les (N+1)-ième à (2N)-ième sections de raccordement (105d-f) sont logées chacune dans l'espace de logement (4) d'une section de contact (2c-f) de la deuxième unité de connexion (1b), dans lequel il est prévu en particulier un moyen de fixation (17) par lequel la première unité de connexion (1a) et la deuxième unité de connexion (1b) peuvent être amenées d'une position desserrée à une position fixée, dans laquelle la première unité de connexion (1a) et la deuxième unité de connexion (1 b) sont fixées l'une à l'autre et l'agencement de conducteurs (5) de la première unité de connexion (1a) et l'agencement de conducteurs (5) de la deuxième unité de connexion (1b) sont isolés électriquement l'un de l'autre.

11. Procédé de fabrication d'un agencement de stator, comprenant les étapes suivantes :
• fournir une unité de connexion (1a ; 1b) selon l'une des revendications 1 à 8 ;
• fournir un stator (101) pour une machine électrique (201), présentant un noyau de stator (102) avec une face frontale axiale (106) et un enroulement de stator (103) qui présente un nombre N de phases et est formé par sections de conducteurs préformés (104a, 104b) s'étendant à travers le noyau de stator (102), et de première à N-ième sections de raccordement (105a-c ; 105d-f) qui s'étendent sur la face frontale (106) de manière adjacente à une partie des conducteurs préformés (104a, 104b) à différentes positions angulaires d'une direction circonférentielle dans la direction axiale et sont configurées soit pour former un point neutre, soit pour former des raccordements pour les phases ; et
• disposer les première à N-ième sections de raccordement (105a-c ; 105d-f) du stator (101) dans les espaces de logement des sections de contact (2a-c ; 2d-f) de l'unité de connexion (1a ; 1b), en particulier en effectuant un déplacement relatif de l'unité de connexion (1a ; 1b) le long d'une direction de déplacement s'étendant de manière sensiblement perpendiculaire ou parallèle à une direction d'extension des sections de raccordement (105a-c ; 105d-f) ;
• et en particulier assembler les sections de raccordement (105a-f) et les sections de contact (2a-f).

12. Procédé selon la revendication 11, dans lequel les première à N-ième sections de raccordement (105a-c) sont configurées pour former un point neutre, l'enroulement de stator étant en outre formé par sections de (N+1)-ième à (2N)-ième sections de raccordement (105d-f) qui s'étendent sur la face frontale de manière adjacente à une partie des conducteurs préformés (104a, 104b) à différentes positions angulaires d'une direction circonférentielle dans la direction axiale et sont configurées pour former des raccordements pour les phases, comprenant en outre les étapes suivantes :
• fournir une deuxième unité de connexion (1b) selon l'une des revendications 1 à 8, dont l'agencement de conducteurs (5) comprend N sections de conducteur (14a-c) qui sont isolées électriquement les unes des autres et sont reliées chacune de manière électriquement conductrice à l'une des N sections de contact (2c-f) pour former un raccordement pour l'une des phases ; et
• disposer les (N+1)-ième à (2N)-ième sections de raccordement (105d-f) du stator (101) dans les espaces de logement (4) des sections de contact (2c-f) de la deuxième unité de connexion (1b), en particulier en effectuant un déplacement relatif de la deuxième unité de connexion (1b) le long d'une direction de déplacement s'étendant de manière sensiblement perpendiculaire ou parallèle à une direction d'extension des sections de raccordement (105d-f).

13. Procédé selon la revendication 12, comprenant en outre l'étape suivante :
• amener la première unité de connexion (1a) et la deuxième unité de connexion (1b) d'une position desserrée à une position fixée au moyen d'un moyen de fixation (17) ou au moyen de sections de fixation (8, 10) formées par les unités de connexion (1a, 1b), la première unité de connexion (1a) et la deuxième unité de connexion (1b) étant fixées l'une à l'autre dans la position fixée et l'agencement de conducteurs (5) de la première unité de connexion (1a) et l'agencement de conducteurs (5) de la deuxième unité de connexion (1b) étant isolés électriquement l'un de l'autre ;
dans lequel il est prévu en particulier une étape de retrait du moyen de fixation (17) en l'amenant de la position fixée à la position desserrée après l'assemblage des sections de raccordement (105a-f) et des sections de contact (2a-f).

14. Machine électrique (201) pour l'entraînement d'un véhicule (200), comprenant : une stucture de stator (101) selon la revendication 9 ou 10 ou une structure de stator (101) obtenue par un procédé selon l'une des revendications 11 à 13 ; et un rotor (202) logé de manière rotative à l'intérieur du stator (101).
